(19) Europäisches Patentamt European Patent Office Office européen des brevets

(11) **EP 3 936 560 A1**

(12) **EUROPEAN PATENT APPLICATION**
published in accordance with Art. 153(4) EPC

(43) Date of publication:
**12.01.2022 Bulletin 2022/02**

(51) Int Cl.:
**C08J 9/16** (2006.01)

(21) Application number: **20766388.1**

(22) Date of filing: **03.03.2020**

(86) International application number:
**PCT/JP2020/008918**

(87) International publication number:
**WO 2020/179786 (10.09.2020 Gazette 2020/37)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.03.2019 JP 2019038820**

(71) Applicant: **Kaneka Corporation**
**Osaka-shi, Osaka 530-8288 (JP)**

(72) Inventor: **HAYASE, Yuki**
**Settsu-shi, Osaka 566-0072 (JP)**

(74) Representative: **Vossius & Partner**
**Patentanwälte Rechtsanwälte mbB**
**Siebertstraße 3**
**81675 München (DE)**

(54) **POLYOLEFIN RESIN PARTICLES AND USE THEREOF**

(57) An object of an embodiment of the present invention is to provide novel polyolefin-based resin particles, which make it possible to provide expanded particles that enable provision of a molded product excellent in surface property. An embodiment of the present invention achieves the object by polyolefin-based resin particles which contain a polyolefin-based resin as a base material resin, and which have: a particle weight in a specific range; and a $L_{12}/D_{12}$ shrinkage rate of not less than 50%, the $L_{12}/D_{12}$ shrinkage rate = $100 \times (1 - $ (average $L_2/D_2$ ratio of expanded particles)/(average $L_1/D_1$ ratio of resin particles)) ... Equation (1).

EP 3 936 560 A1

## Description

Technical Field

The present invention relates to polyolefin-based resin particles and use of the polyolefin-based resin particles.

Background Art

Polyolefin-based resin in-mold foamed molded products (hereinafter, also referred to simply as "molded products") are used in a wide variety of applications, including shipping materials (such as shock-absorbing packing materials, returnable containers, and shock-absorbing materials for transport by truck), thermal insulating materials, civil engineering and construction materials, and automotive components (such as tool boxes and floor core materials).

Polyolefin-based resin in-mold foamed molded products can be obtained by in-mold foam molding of polyolefin-based resin expanded particles (hereinafter, also referred to simply as "expanded particles"). The polyolefin-based resin expanded particles can be obtained by (i) impregnating, with a blowing agent, polyolefin-based resin particles (hereinafter, also referred to simply as "resin particles") containing a polyolefin-based resin, and (ii) then expanding the polyolefin-based resin particles.

Conventionally, various polyolefin-based resin in-mold foamed molded products, polyolefin-based resin expanded particles, and polyolefin-based resin particles have been developed.

Patent Literature 1 discloses polypropylene-based resin pre-expanded particles which contain, as a base material resin, a polypropylene-based resin composition containing a polypropylene-based resin, a fatty acid amide compound, and a petroleum resin and/or a terpene-based resin.

Patent Literature 2 discloses polypropylene-based resin expanded particles obtained by expanding polypropylene-based resin particles which contain, as a base material resin, a polypropylene-based resin mixture. This polypropylene-based resin mixture is prepared by mixing a polypropylene-based resin having a melting point of not lower than 140°C and not higher than 155°C and a melt flow rate of not less than 4.0 g/10 minutes and not more than 10 g/10 minutes and a polypropylene-based resin having a melt flow rate of not less than 0.1 g/ 10 minutes and not more than 2.0 g/ 10 minutes.

Patent Literature 3 discloses polypropylene-based resin expanded particles including polypropylene resin particles which contain, as a base material resin, a polypropylene-based resin mixture containing a polypropylene-based resin and a polypropylene-based wax is used as a base material resin.

Citation List

[Patent Literature]

[Patent Literature 1]
Japanese Patent Application Publication Tokukai No. 2008-274025
[Patent Literature 2]
Japanese Patent Application Publication Tokukai No. 2017-179281
[Patent Literature 3]
PCT International Publication No. WO 2017/169260

Summary of Invention

Technical Problem

However, the above-described conventional techniques are insufficient and have some room for improvement, in terms of providing a molded product excellent in surface property.

An embodiment of the present invention has been attained in view of the above problems. An object of an embodiment of the present invention is to provide novel polyolefin-based resin particles, which make it possible to provide expanded particles that enable provision of a molded product excellent in surface property.

Solution to Problem

In order to solve the above problem, the inventors of the present invention made diligent studies. As a result, the inventors have found that it is possible to provide a molded product excellent in surface property by using resin particles having an $L_{12}/D_{12}$ shrinkage rate in a specific range, the $L_{12}/D_{12}$ shrinkage rate being calculated from an average $L_1/D_1$ ratio of resin particles and an average $L_2/D_2$ ratio of expanded particles. On the basis of this finding, the inventors have accomplished the present invention.

In other words, polyolefin-based resin particles in accordance with an embodiment of the present invention contain a polyolefin-based resin as a base material resin, the polyolefin-based resin particles having:

a weight per particle of not less than 0.5 mg/particle and not more than 5.0 mg/particle; and
an $L_{12}/D_{12}$ shrinkage rate of not less than 50%, the $L_{12}/D_{12}$ shrinkage rate being calculated by the following Equation (1):

$$L_{12}/D_{12} \text{ shrinkage rate} = 100 \times (1 - (\text{average } L_2/D_2 \text{ ratio}$$
$$\text{of polyolefin-based resin expanded particles})/(\text{average } L_1/D_1$$
$$\text{ratio of the polyolefin-based resin particles})) \cdots \text{ Equation (1),}$$

where the polyolefin-based resin expanded particles are obtained by expanding the polyolefin-based resin particles and have an expansion ratio of not less than 15.

Further, a method of producing polyolefin-based resin particles in accordance with an embodiment of the present invention includes the step of

adjusting an $L_{45}/D_{45}$ shrinkage rate to not less than 50%, the $L_{45}/D_{45}$ shrinkage rate being calculated by the following Equation (2),

$$L_{45}/D_{45} \text{ shrinkage rate} = 100 \times (1 - (\text{average } L_5/D_5 \text{ ratio}$$
$$\text{of polyolefin-based resin expanded particles})/(\text{average } L_4/D_4$$
$$\text{ratio of the polyolefin-based resin particles})) \cdots \text{ Equation (2),}$$

where the polyolefin-based resin expanded particles are obtained by expanding the polyolefin-based resin particles and have an expansion ratio of not less than 15,
the polyolefin-based resin particles having a weight per particle of not less than 0.5 mg/particle and not more than 5.0 mg/particle.

Further, a method of producing polyolefin-based resin expanded particles in accordance with an embodiment of the present invention includes the steps of:

preparing a dispersion slurry by mixing polyolefin-based resin particles, a dispersion medium, and a blowing agent in a container; and
expelling the dispersion slurry into an area having a pressure lower than an internal pressure of the container, and obtaining the polyolefin-based resin expanded particles having an expansion ratio of not less than 15 times,
the polyolefin-based resin expanded particles having an $L_{67}/D_{67}$ shrinkage rate of not less than 50%, the $L_{67}/D_{67}$ shrinkage rate being calculated by the following Equation (3):

$$L_{67}/D_{67} \text{ shrinkage rate} = 100 \times (1 - (\text{average } L_7/D_7 \text{ ratio}$$

$$\text{of the polyolefin-based resin expanded particles})/(\text{average}$$

$$L_6/D_6 \text{ ratio of the polyolefin-based resin particles})) \cdots$$

$$\text{Equation (3)}.$$

Further, a method of producing polyolefin-based resin particles in accordance with an embodiment of the present invention includes the steps of:

(a) preparing a polyolefin-based resin composition, by (i) melting by heating and (ii) kneading a blend containing a polyolefin-based resin in an extruder;
(b) extruding the polyolefin-based resin composition thus prepared, through one or more discharge holes provided in a die attached to the extruder;
(c) solidifying by cooling the polyolefin-based resin composition thus extruded, with use of a cooling device including a cooling medium;
(d) taking off, into a gas phase, the polyolefin-based resin composition thus solidified, with use of a take-off device; and
(e) shredding the polyolefin-based resin composition thus taken off, with use of a shredding device, and obtaining the polyolefin-based resin particles,

in step (a), the blend being heated at a heating temperature of not lower than $(Tm_1+40)°C$ and not higher than $(Tm_1+110)°C$, where Tmi represents a melting point of the polyolefin-based resin,
the cooling medium having a temperature of not lower than $(Tm_1-150)°C$ and not higher than $(Tm_1-100)°C$,
in step (d), the resin composition in the gas phase having a surface temperature of not higher than $(Tmi-70)°C$,
the polyolefin-based resin particles having an average $L_4/D_4$ ratio of 2.0 to 5.0,
a degree of stretching calculated by the following Equation (15) being 10 m/min to 100 m/min,

$$\text{the degree of stretching} = \text{take-off speed} - \text{resin linear}$$

$$\text{velocity} \cdots \text{Equation (15)},$$

where:

the take-off speed is a speed per unit time at which the take-off device takes off the polyolefin-based resin composition in step (d); and
the resin linear velocity is a value calculated by the following Equation (16),

$$\text{the resin linear velocity} = \text{discharge}$$

$$\text{quantity}/(\text{density of the polyolefin-based resin composition} \times$$

$$\text{total area of the discharge holes}) \cdots \text{Equation (16)},$$

where:

the discharge quantity is an amount per unit time of the polyolefin-based resin composition extruded from the extruder in step (b); and
the total area of the discharge holes is the sum of areas of the one or more discharge holes provided in the die attached to the extruder; and

a relaxation time calculated by the following Equation (17) being more than 0 seconds and not more than 0.2000 seconds,

$$\text{the relaxation time} = \text{distance from the die to the cooling medium}/\text{the take-off speed} \cdots \text{Equation (17),}$$

where the distance from the die to the cooling medium is more than 0 mm and less than 100 mm.

Advantageous Effects of Invention

An embodiment of the present invention can advantageously provide polyolefin-based resin particles, which make it possible to provide expanded particles that enable provision of a molded product excellent in surface property.

Brief Description of Drawings

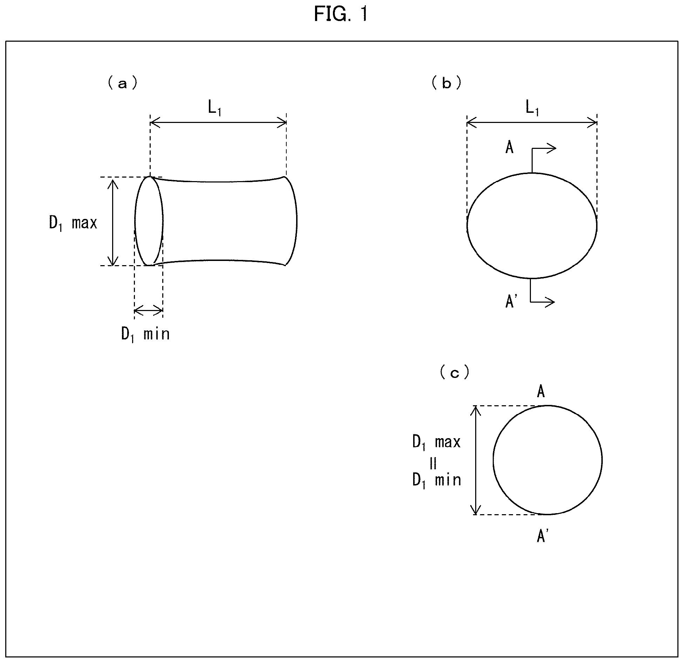

(a) of Fig. 1 is a view of a columnar polyolefin-based resin particle in accordance with an embodiment of the present invention seen from a certain direction, (b) of Fig. 1 is a view of a substantially spherical polyolefin-based resin particle in accordance with an embodiment of the present invention seen from a certain direction, and (c) of Fig. 1 is a cross sectional view taken along line A-A' shown in (b) of Fig. 1.

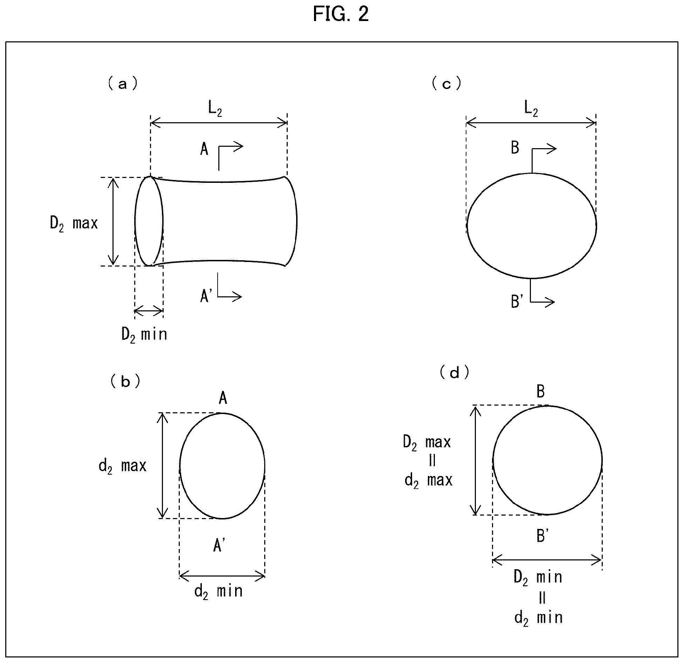

(a) of Fig. 2 is a view of a columnar polyolefin-based resin expanded particle in accordance with an embodiment of the present invention seen from a certain direction, (b) of Fig. 2 is a cross-sectional view taken along line A-A' shown in (a) of Fig. 2, (c) of Fig. 2 is a view of a substantially spherical polyolefin-based resin expanded particle in accordance with an embodiment of the present invention seen from a certain direction, and (d) of Fig. 2 is a cross-sectional view taken along line B-B' shown in (c) of Fig. 2.

Fig. 3 shows an example of a DSC curve which is obtained by performing differential scanning calorimetry (DSC) in which polyolefin-based resin expanded particles in accordance with an embodiment of the present invention having a temperature of 40°C is heated to 220°C at a temperature increase rate of 10°C/min. The DSC curve has a horizontal axis representing temperature, and a vertical axis representing heat quantity.

Fig. 4 is a diagram showing an example of an enlarged portion of the surface of a polyolefin-based resin in-mold foamed molded product.

Fig. 5 is an example of boundary lines.

Description of Embodiments

The following description will discuss an embodiment of the present invention. However, the present invention is not limited to the embodiment. The present invention is not limited to the configurations described below, but may be altered in various ways within the scope of the claims by a person skilled in the art. The present invention also encompasses, in its technical scope, any embodiment or example derived by combining technical means disclosed in respective differing embodiments and Examples. Further, it is possible to form a new technical feature by combining the technical means disclosed in the respective embodiments. All academic and patent documents cited in the present specification are incorporated herein by reference.

Any numerical range expressed as "A to B" in the present specification means "not less than A and not more than B (i.e., a range from A to B which includes both A and B)" unless otherwise stated.

Furthermore, in the present specification, a copolymer containing, as structural units, a structural unit derived from monomer $X_1$, a structural unit derived from monomer $X_2$, ... , and a structural unit derived from monomer $X_n$ (where n is an integer of 2 or more) may be referred to as "$X_1/X_2/$ ... $/X_n$ copolymer", unless otherwise stated. Such a $X_1/X_2/$ ... $/X_n$ copolymer is not particularly limited as to the manner in which the structural units of the polymer are arranged, unless otherwise stated, and may be a random copolymer, a block copolymer, or a graft copolymer. Furthermore, in the present specification, an elastomer containing, as structural units, a structural unit derived from monomer $X_1$, a structural unit derived from monomer $X_2$, ... , and a structural unit derived from monomer $X_n$ (where n is an integer of 2 or more) may be referred to as "$X_1/X_2/$ ... $/X_n$ rubber", unless otherwise stated.

[1. Technical idea of an embodiment of the present invention]

Patent Literatures 1 to 3 each disclose a technique for providing expanded particles that enable provision of a molded product excellent in surface property, by using resin particles containing additives such as a fatty acid amide compound, a petroleum resin and a terpene-based resin or using a special polypropylene-based resin. In this way, in order to provide expanded particles that enable provision of a molded product excellent in surface property, a person skilled in the art conventionally aimed at improvement of a composition (components) of resin particles, that is, focused on using specific additives and a specific resin(s).

The inventors of the present invention have aimed at achieving the above object, from a viewpoint different from a conventional viewpoint of a person skilled in the art. In other words, an object of an embodiment of the present invention is to provide, without use of a special composition as a resin composition of a polyolefin-based resin, novel polyolefin-based resin particles which make it possible to provide expanded particles that enable provision of a molded product excellent in surface property.

In order to solve the above problem, the inventors of the present invention made diligent studies. As a result, the inventors have found that a molded product excellent in surface property can be provided by using resin particles having, as a physical property, an L/D shrinkage rate in a specific range.

[2. Polyolefin-based resin particles]

The polyolefin-based resin particles in accordance with an embodiment of the present invention contain a polyolefin-based resin as a base material resin, the polyolefin-based resin particles having: a weight per particle of not less than 0.5 mg/particle and not more than 5.0 mg/particle; and an $L_{12}/D_{12}$ shrinkage rate of not less than 50%; and the $L_{12}/D_{12}$ shrinkage rate being calculated by the foregoing Equation (1). In the present specification, the "polyolefin-based resin particles" are also referred to as "resin particles", and the "polyolefin-based resin particles in accordance with an embodiment of the present invention" is also referred to as "the present resin particles".

Since the present resin particles have the above configuration, it is possible to provide, without use of a special composition as a resin composition of the polyolefin-based resin, expanded particles that enable provision of a molded product excellent in surface property. In the present specification, the surface property is a property that is evaluated in terms of surface smoothness and surface integrity. The surface smoothness and the surface integrity are evaluated by a method which will be described later in detail in Examples etc. Note that in an embodiment of the present invention, it is possible to use various polyolefin-based resins including a polyolefin-based resin that has a special configuration.

(2-1. Polyolefin-based resin)

The term "base material resin" of the present resin particles means a resin that accounts for not less than 50% by weight in 100% by weight of resins contained in the resin particles. In the present specification, the term "resins contained in the resin particles" means (i) a polyolefin-based resin contained in the resin particles and (ii) a thermoplastic resin and an elastomer other than the polyolefin-based resin, each of which can be contained in the resin particles. The present resin particles contain the polyolefin-based resin in an amount of not less than 50% by weight, preferably not less than 60% by weight, more preferably not less than 70% by weight, even more preferably not less than 80% by weight, and particularly preferably not less than 90% by weight, with respect to 100% by weight of the resins contained in the resin particles.

The polyolefin-based resin is not particularly limited, provided that the polyolefin-based resin is a polymer compound synthesized by using an olefin as a monomer. Examples of the polyolefin-based resin include a polyethylene-based resin, and a polypropylene-based resin. Each of these polyolefin-based resins can be used alone or in combinations of two or more.

The polyethylene-based resin is preferably a resin which contains, as a structural unit, a structural unit derived from an ethylene monomer in an amount of not less than 50% by weight with respect to 100% by weight of all structural units. Examples of the polyethylene-based resin include: high-density polyethylene, medium-density polyethylene, low-density polyethylene, linear low-density polyethylene, styrene-modified polyethylene-based resin, an ethylene/vinyl acetate copolymer, an ethylene/propylene copolymer, an ethylene/1-butene copolymer, an ethylene/1-butene/propylene copolymer, an ethylene/hexene copolymer, and an ethylene/4-methyl-1-pentene copolymer. Each of these polyethylene-based resins can be used alone, or in combinations of two or more.

Examples of the polypropylene-based resin include: a polypropylene homopolymer, an ethylene/propylene random copolymer, 1-butene/propylene random copolymer, an ethylene/1-butene/propylene random copolymer, an ethylene/propylene block copolymer, a 1-butene/propylene block copolymer, a propylene/chlorinated vinyl copolymer, and a propylene/maleic anhydride copolymer. Each of these polypropylene-based resins can be used alone, or in combinations of two or more.

The following description will discuss a case in which a copolymer, such as an ethylene-propylene copolymer, contains, as structural units, a structural unit derived from an ethylene monomer (such a structural unit is also referred to as "ethylene unit") and a structural unit derived from a propylene monomer (such a structural unit is also referred to as "propylene unit"). In this case, a copolymer that contains more ethylene units than propylene units is referred to as "polyethylene-based resin", whereas a copolymer that contains more propylene units than ethylene units is referred to as a "polypropylene-based resin".

The present polyolefin-based resin can contain a thermoplastic resin component and/or an elastomer component other than the polyolefin-based resin, provided that effects of the present invention are not eliminated or reduced. Examples of the thermoplastic resin other than the polyolefin-based resin include a vinyl acetate-based resin, a thermoplastic polyester resin, an acrylic ester resin, a styrene-based resin, and a polyamide resin. Each of these thermoplastic resins can be used alone, or in combinations of two or more. Examples of the elastomer other than the polyolefin-based resin include an ethylene/propylene rubber, and an ethylene/propylene/butadiene rubber. Each of these elastomers can be used alone, or in combinations of two or more. In the present specification, "a thermoplastic resin component and/or an elastomer component other than the polyolefin-based resin" may also be referred to as "another resin".

(2-2. Resin particle additive)

The present resin particles may contain various additives other than the polyolefin-based resin as needed.

In the present specification, the term "resin particle additive" may be used to refer to an additive(s) contained in the polyolefin-based resin particles, that is, an additive(s) kneaded into the polyolefin-based resin particles. The term "resin particle additive" can also be said to be a component other than resins (the polyolefin-based resin, and the thermoplastic resin and the elastomer other than the polyolefin-based resin) in the resin particles.

Examples of the resin particle additive which may be contained in the present resin particles include a hydrophilic compound, an antioxidant, a thermal stabilizer, an ultraviolet absorber, a flame retardant, an antistatic agent, a metal deactivator, carbon black, a pigment, a dye, a nucleating agent, and a cell adjusting agent.

The total amount of all of these resin particle additives is preferably not more than 25 parts by weight, more preferably not more than 10 parts by weight, and even more preferably not more than 5 parts by weight, with respect to 100 parts by weight of the resins contained in the resin particles. When the total amount of the resin particle additives is not more than 25 parts by weight with respect to 100 parts by weight of the resins contained in the resin particles, there are the following advantages: (a) in production process of expanded particles using the resin particles thus obtained, there is no possibility of deterioration in dispersibility of the polyolefin-based resin particles in a dispersion slurry; (b) the average cell diameter of resultant expanded particles does not become too fine; (c) the expanded particles enable provision of a good molded product in a molding process, and (d) no decrease occurs in mechanical strength of a resultant molded product.

In order to obtain a molded product having an excellent surface property, the present resin particles may further contain the resin particle additives such as a fatty acid amide compound, a petroleum resin, and a terpene-based resin, and a special polyolefin-based resin as disclosed in Patent Literatures 1 to 3. In a case where the present resin particles further contain the resin particle additives such as a fatty acid amide compound, a petroleum resin, and a terpene-based resin, and a special polyolefin-based resin, the resin particles make it possible to provide expanded particles that enable provision of a molded product better in surface property.

(2-3. Weight per particle)

The weight per particle of the present resin particles (such a weight is also referred to as "particle weight") is preferably not less than 0.5 mg/particle and not more than 5.0 mg/particle, and more preferably not less than 0.8 mg/particle and not more than 4.0 mg/particle. (a) In a case where the weight per particle of the polyolefin-based resin particles is not less than 0.5 mg/particle, there is no possibility of deterioration in handleability and cutting property of the resin particles. On the other hand, (b) in a case where the weight per particle of the polyolefin-based resin particles is not more than 5 mg/particle, there is no possibility of deterioration in mold-filling property of expanded particles obtained from the resin particles, in in-mold foam molding with use of the expanded particles. It should be noted that when the expanded particles has an excellent mold-filling property, there is an advantage that the length of a drying time after molding becomes shorter for a molded product produced from the expanded particles. In other words, it can be said that expanded particles excellent in mold-filling property enables provision of a molded product while achieving excellent productivity.

(2-4. Shape of resin particles)

The shape of the present resin particles is not particularly limited. Examples of the shape of the present resin particles include a columnar shape (also referred to as a cylindrical shape), an elliptical shape, a substantially spherical shape, a spherical shape, a rectangular parallelepiped shape, and a cuboid shape. The cross-sectional shape of particles having a columnar shape is not particularly limited, and can be, for example, an elliptical shape, a substantially circular shape, or a circular shape.

(2-5. Average $L_1/D_1$ ratio)

The present resin particles have an average $L_1/D_1$ ratio of preferably 2.0 to 5.0, more preferably 2.3 to 5.0, more preferably 2.5 to 5.0, more preferably 2.7 to 5.0, and even more preferably 3.0 to 5.0. (a) When the average $L_1/D_1$ ratio is not less than 2.0, there is an advantage that it is possible to provide expanded particles that enable provision of a molded product excellent in surface property. On the other hand, (b) when the average $L_1/D_1$ ratio is not more than 5.0, there is an advantage that since the resin particles can be easily produced, it is possible to achieve excellent producibility.

The average $L_1/D_1$ ratio is an average value calculated from $L_1/D_1$ ratios of randomly chosen 10 particles of the polyolefin-based resin particles.

The following will discuss $L_1$ and $D_1$, with reference to Fig. 1. (a) of Fig. 1 is a view of a columnar polyolefin-based resin particle in accordance with an embodiment of the present invention seen from a certain direction. (b) of Fig. 1 is a view of a substantially spherical polyolefin-based resin particle in accordance with an embodiment of the present invention seen from a certain direction. (c) of Fig. 1 is a cross sectional view taken along line A-A' shown in (b) of Fig. 1. It should be noted that the line A-A' shown in (b) of Fig. 1 passes through the center in the $L_1$ direction.

As shown in (a) and (b) of Fig. 1, $L_1$ is the length of the longest portion of the polyolefin-based resin particle. As shown in (a) of Fig. 1, it can also be said that $L_1$ is the length of the longest portion in the longer-side direction of the polyolefin-based resin particle. Further, it can also be said that in a case where the polyolefin-based resin particles are produced by being extruded from an extruder or the like as described later, $L_1$ is the length of the longest portion in an extrusion direction of the polyolefin-based resin particle.

$D_1$ is an average value of the maximum diameter $D_1max$ and the minimum diameter $D_1min$ in a cross section perpendicular to the $L_1$ direction at a maximum diameter portion of the polyolefin-based resin particle as shown in (a) and (c) of Fig. 1. $D_1$ is a value calculated by the following Equation (4):

$$D_1 = (D_1max + D_1min)/2 \cdots Equation (4).$$

As shown in (a) of Fig. 1, when the polyolefin-based resin particle has a columnar shape, the maximum diameter portion of the polyolefin-based resin particle may be an end portion of the polyolefin-based resin particle. As shown in (c) of Fig. 1, when the polyolefin-based resin particle has a substantially spherical shape, the maximum diameter portion of the polyolefin-based resin particle may be a central portion of the polyolefin-based resin particle in the $L_1$ direction.

As shown in (c) of Fig. 1, the substantially spherical polyolefin-based resin particle shown in (b) and (c) of Fig. 1 has a circular cross section perpendicular to the $L_1$ direction of the maximum diameter portion. Therefore, in the substantially spherical polyolefin-based resin particle shown in (b) and (c) of Fig. 1, respective values of $D_1max$ and $D_1min$ are equal to each other.

The average $L_1/D_1$ ratio can be adjusted by appropriately changing a take-off speed and a shredding speed of the resin particles in production of the resin particles. The take-off speed and the shredding speed of the resin particles will be described in detail in [3. Method of producing polyolefin-based resin particles] later.

In the present resin particles, the shape of the cross section perpendicular to the $L_1$ direction may be a closed curve without a recess, such as a circle or an ellipse.

(2-6. $L_{12}/D_{12}$ shrinkage rate)

The present resin particles have the $L_{12}/D_{12}$ shrinkage rate calculated by the foregoing Equation (1) is not less than 50%, preferably not less than 60%, more preferably not less than 70%, even more preferably not less than 75%, and particularly preferably not less than 80%. When the $L_{12}/D_{12}$ shrinkage rate is not less than 50%, the resin particles obtained as a result make it possible to provide expanded particles that enable provision of a molded product excellent in surface property.

The upper limit of the $L_{12}/D_{12}$ shrinkage rate is not particularly limited. The upper limit is preferably not more than 100%, more preferably not more than 95%, even more preferably not more than 90%, and particularly preferably not more than 85%. When the $L_{12}/D_{12}$ shrinkage rate is not more than 100%, there is an advantage that excellent producibility is achieved.

The following will discuss polyolefin-based resin expanded particles for determining an average $L_2/D_2$ ratio. The polyolefin-based resin expanded particles for determining the average $L_2/D_2$ ratio in Equation (1) are obtained by expanding polyolefin-based resin particles for which the average $L_1/D_1$ ratio in Equation (1) has been determined. The polyolefin-based resin expanded particles thus obtained have an expansion ratio of not lower than 15 times. In order to obtain the polyolefin-based resin expanded particles for determining the average $L_2/D_2$ ratio in Equation (1), the polyolefin-based resin particles, for which the average $L_1/D_1$ ratio in Equation (1) has been determined, may be expanded by a method which is not particularly limited and which can be, for example, a method including the steps (a-1) to (a-3) in this order: (a-1) the step of preparing a dispersion slurry by mixing the polyolefin-based resin particles, a dispersion medium, and a blowing agent in a container; (a-2) the step of raising the temperature in the container to a desired expansion temperature and raising the pressure in the container to a desired expansion pressure; and (a-3) the step of obtaining expanded particles having an expansion ratio of not less than 15 times, by expelling the dispersion slurry into an area having a pressure lower than the internal pressure of the container. The expansion ratio is, for example, 15 times or 20 times. The dispersion medium is, for example, water, and the blowing agent is, for example, carbon dioxide. The expansion temperature is, for example, 153°C, and the expansion pressure is, for example, 3 MPa·G. In the present specification, "G" appended in the pressure unit "Pa·G" indicates that the pressure is expressed in gage pressure.

In order to obtain the polyolefin-based resin expanded particles for determining the average $L_2/D_2$ ratio in Equation (1), the polyolefin-based resin particles, for which the average $L_1/D_1$ ratio in Equation (1) has been determined, may also be expanded by, for example, a method including the steps (b-1) to (b-5) in this order: (b-1) the step of putting, in an autoclave having an inner volume of 0.3 m$^3$, 100 parts by weight of the polyolefin-based resin particles, 200 parts by weight of water as the dispersion medium, 1 part by weight of tricalcium phosphate as a dispersing agent, and 0.07 parts by weight of sodium alkyl sulfonate as a dispersion auxiliary agent, and sealing the autoclave (container); (b-2) thereafter, the step of adding, in the container, 5 parts by weight of carbon dioxide gas as the blowing agent, and preparing a dispersion slurry by stirring these raw materials put in the container; (b-3) next, the step of raising the temperature in the container to 153°C (expansion temperature) and raising the pressure in the container to 3.0 MPa·G (expansion pressure); (b-4) subsequently, maintaining the temperature and the pressure in the container at the above expansion temperature and the above expansion pressure, for 20 minutes; and (b-5) then, the step of obtaining the polyolefin-based resin expanded particles, by opening one end of the autoclave and expelling the dispersion slurry in the container into a cylindrical container of a non-sealed system (under atmospheric pressure) through an orifice plate of 3.2 mmcp.

The average $L_2/D_2$ ratio is an average value calculated from $L_2/D_2$ ratios of randomly chosen 10 particles of the polyolefin-based resin expanded particles which have been obtained as described above.

The following will discuss $L_2$ and $D_2$, with reference to Fig. 2. (a) of Fig. 2 is a view of a columnar polyolefin-based resin expanded particle in accordance with an embodiment of the present invention seen from a certain direction. (b) of Fig. 2 is a cross-sectional view taken along line A-A' shown in (a) of Fig. 2. (c) of Fig. 2 is a view of a substantially spherical polyolefin-based resin expanded particle in accordance with an embodiment of the present invention seen from a certain direction. (d) of Fig. 2 is a cross-sectional view taken along line B-B' shown in (c) of Fig. 2. It should be noted that each of the line A-A' shown in (a) of Fig. 2 and the line B-B' shown in (c) of Fig. 2 passes through the center in the $L_2$ direction.

As shown in (a) and (c) of Fig. 2, $L_2$ is the length of the longest portion of each of those polyolefin-based resin expanded particles. As shown in (a) of Fig. 2, it can also be said that $L_2$ is the length of the longest portion in the longer-side direction of the polyolefin-based resin expanded particle.

$D_2$ is an average value of the maximum diameter $D_2max$ and the minimum diameter $D_2min$ in a cross section perpendicular to the $L_2$ direction at a maximum diameter portion of the polyolefin-based resin expanded particle as shown in (a) and (d) of Fig. 2. $D_2$ is a value calculated by the following Equation (5):

$$D_2 = (D_2max + D_2min)/2 \cdots \text{Equation (5)}.$$

As shown in (a) of Fig. 2, when the polyolefin-based resin expanded particle has a columnar shape, the maximum diameter portion of the polyolefin-based resin expanded particle may be an end portion of the polyolefin-based resin expanded particle. As shown in (d) of Fig. 2, when the polyolefin-based resin expanded particle has a substantially spherical shape, the maximum diameter portion of the polyolefin-based resin expanded particle may be a central portion of the polyolefin-based resin expanded particle in the $L_2$ direction.

As shown in (d) of Fig. 2, in the substantially spherical polyolefin-based resin expanded particle shown in (c) and (d) of Fig. 2, the shape of the cross section perpendicular to the $L_2$ direction of the maximum diameter portion is circular. Therefore, in the substantially spherical polyolefin-based resin expanded particle shown in (c) and (d) of Fig. 2, respective values of $D_2max$ and $D_2min$ are equal to each other.

The $L_{12}/D_{12}$ shrinkage rate can be adjusted by appropriately changing a resin temperature, an area per discharge hole, a discharge quantity, a resin linear velocity, a distance from a die to a cooling medium, the temperature of the cooling medium, a cooling time, a take-off speed, a degree of stretching, a relaxation time and the average $L_1/D_1$ ratio, etc., in production of the resin particles. The resin temperature, the area per discharge hole, the discharge quantity, the resin linear velocity, the distance from the die to the cooling medium, the temperature of the cooling medium, the cooling time, the degree of stretching, and the relaxation time will be described in detail in [3. Method of producing polyolefin-based resin particles] below.

(2-7. Method of producing resin particles)

The method of producing the present resin particles is not particularly limited. The present resin particles are preferably produced by the method of producing polyolefin-based resin particles described in [3. Method of producing polyolefin-based resin particles] described below.

[3. Method of producing polyolefin-based resin particles]

The method of producing polyolefin-based resin particles in accordance with an embodiment of the present invention includes the step of adjusting an $L_{45}/D_{45}$ shrinkage rate to not less than 50%, the L45/D45 shrinkage rate being calculated by the foregoing Equation (2), the polyolefin-based resin particles having a weight per particle of not less than 0.5 mg/particle and not more than 5.0 mg/particle.

In the present specification, the "method of producing polyolefin-based resin particles in accordance with an embodiment of the present invention" is also referred to as "the present method of producing resin particles".

Since the present method of producing resin particles has the above configuration, it is possible to obtain, without use of a special composition as a resin composition of the polyolefin-based resin, polyolefin-based resin particles which can provide expanded particles that enable provision of a molded product excellent in surface property.

The present method of producing resin particles is suitably used for producing the present resin particles described in the above section [2. Polyolefin-based resin particles]. An aspect of the polyolefin-based resin particles in the present method of producing resin particles includes a preferred aspect, and may be the same as that of the polyolefin-based resin particles described in the above section [2. Polyolefin-based resin particles].

The present method of producing resin particles may be a production method including the step of adjusting the $L_{45}/D_{45}$ shrinkage rate obtained by the foregoing Equation (2) to not less than 50%, in addition to a well-known method of producing polyolefin-based resin particles. In the present specification, "the step of adjusting an $L_{45}/D_{45}$ shrinkage rate obtained by the foregoing Equation (2) to not less than 50%" is also referred to as "$L_{45}/D_{45}$ shrinkage rate adjusting step".

The present method of producing resin particles may further include, for example, the steps of: (A1) preparing a polyolefin-based resin composition containing a polyolefin-based resin, and another resin and a resin particle additive as needed; and (A2) forming and shredding the polyolefin-based resin composition into a desired shape.

The present method of producing resin particles may further include, for example, the steps of: (B1) preparing a polyolefin-based resin composition, which is a melt-kneaded material, by melt-kneading a blend containing a polyolefin-based resin, and another resin and a resin particle additive as needed; (B2) cooling the polyolefin-based resin composition thus melt-kneaded; and (B3) forming and shredding, by a shredding device, the polyolefin-based resin composition thus cooled, the polyolefin-based resin composition being shredded into a desired shape such as a columnar shape, an elliptical shape, a spherical shape, a cuboid shape, a rectangular parallelepiped shape, or a cylindrical shape (straw-like shape). It is possible to obtain more homogeneous polyolefin-based resin particles by melt-kneading the blend containing the polyolefin-based resin etc.

In the above described (B1), examples of a device for melt-kneading the blend (melt-kneading device) include an extruder, a kneader, a Banbury mixer, and a roller. It is preferable that the melt-kneading device is an extruder, and more preferably a biaxial extruder, since extruders allow the resin particles to be easily and efficiently produced. The polyolefin-based resin composition, which is a melt-kneaded material, can be extruded e.g., in a strand form through one or more discharge holes provided in a die attached to a front end of the melt-kneading device (e.g., extruder). "Extruding" the polyolefin-based resin composition, which is a melt-kneaded material, through the discharge holes may also be referred to as "discharging".

In the above (B2), examples of a device (cooling device) for cooling the polyolefin-based resin composition, which has been melt-kneaded, include a water tank and an water channel which have water therein as the cooling medium. In the above (B2), cooling of the polyolefin-based resin composition, which has been melt-kneaded, may be so-called natural cooling, in which the polyolefin-based resin composition is cooled by only being left at room temperature.

In the above (B3), examples of a device (shredding device) for shredding, into a desired shape, the polyolefin-based resin composition thus cooled include a pelletizer provided with a cutter blade.

The present method of producing resin particles may include, for example, the steps of: (C1) preparing a blend by blending a polyolefin-based resin, and another resin and a resin particle additive as needed; (C2) preparing a polyolefin-based resin composition, which is a melt-kneaded material, by putting the blend in an extruder and melt-kneading the blend; (C3) extruding the polyolefin-based resin composition, which has been melt-kneaded, in a strand form through one or more discharge holes provided in a die attached to the extruder; (C4) solidifying the polyolefin-based resin composition, which has been extruded, by cooling the polyolefin-based resin composition by causing the polyolefin-based resin composition to pass through a water tank; (C5) taking off, with use of a take-off device, the polyolefin-based resin composition thus solidified; and (C6) forming and shredding, by a cutter or the like, the polyolefin-based resin composition which has been taken off, the polyolefin-based resin composition being shredded into a desired shape such as a columnar shape, an elliptical shape, a spherical shape, a cuboid shape, or a rectangular parallelepiped shape. In the above (C3), the polyolefin-based resin composition which has been melt-kneaded may be extruded directly into the water tank through the one or more discharge holes provided in the die attached to the extruder, and immediately after this extrusion, may be shredded, cooled and solidified.

In step (C1) described above, in a case where the another resin and/or the resin particle additive is/are used, a mixture (resin composition) containing the another resin and/or the resin particle additive may be granulated before blending the another resin and/or the resin particle additive with the polyolefin-based resin. That is, the following (i) to (iv) may be carried out in advance: (i) preparing a blend by blending the another resin and/or the resin particle additive, (ii) preparing the resin composition, by putting the blend in an extruder and melt-kneading the blend in the extruder, (iii) extruding the resin composition through the one or more discharge holes provided in a die attached to the extruder, and (iv) shredding the resin composition which has been extruded after cooling or concurrently with cooling, so that the resin composition is formed into a desired shape. Then, step (C2) may be arranged to be the step of: putting, in the extruder of step (C2), the polyolefin-based resin and particles of the another resin and/or the resin particle additive in place of the blend containing the polyolefin-based resin, and the another resin and the resin particle additive as needed, the particles having been obtained by granulation as described above; and melt-kneading the polyolefin-based resin and the particles so as to prepare the polyolefin-based resin composition which is a melt-kneaded material. In a case where the another resin and/or the resin particle additive is/are used in step (C1) described above, the another resin and/or the resin particle additive may be added at some point in the course of a process in the extruder. In other words, the steps (C1) and (C2) described above may be arranged as the steps of: putting only the polyolefin-based resin in the extruder; then feeding the another resin and/or the resin particle additive at some point in the course of the process in the extruder; mixing the polyolefin-based resin and the another resin and/or the resin particle additive; and preparing the polyolefin-based resin composition by melt-kneading. These steps can be followed by step (C3) and subsequent steps.

The resin particle additive used as needed may be formed into a masterbatch. In other words, it is possible to prepare a masterbatch resin in which the resin particle additive is contained at a high concentration in a certain resin. In this case, the masterbatch may be added as the resin particle additive. The certain resin used in preparing the masterbatch resin is preferably a polyolefin-based resin. From the viewpoint of good compatibility, it is most preferable to use, in forming the masterbatch, a polyolefin-based resin that is of the same kind as the polyolefin-based resin of the base material resin.

Respective aspects of the $L_{45}/D_{45}$ shrinkage rate, an average $L_4/D_4$ ratio, and an $L_5/D_5$ ratio include preferred aspects, and may be the same as those of the $L_{12}/D_{12}$ shrinkage rate, the average $L_1/D_1$ ratio, and the average $L_2/D_2$ ratio which are described in the above section [2. Polyolefin-based resin particles]. In other words, $L_4$, $D_4$, $L_5$, and $D_5$ can be described by replacing $L_4$ with $L_1$, $D_4$ with $D_1$, $L_5$ with $L_2$, and $D_5$ with $D_2$, respectively.

The $L_{45}/D_{45}$ shrinkage rate adjusting step may be the step of adjusting various conditions in the method of producing resin particles. Examples of the various conditions include the resin temperature, the area per discharge hole, the discharge quantity, the resin linear velocity, the distance from the die to the cooling medium, the temperature of the cooling medium, the cooling time, the take-off speed, the degree of stretching, the relaxation time and the average $L_4/D_4$ ratio. The present method of producing resin particles can also be said to be a production method including the step of adjusting one or more selected from the group consisting of the resin temperature, the area per discharge hole, the discharge quantity, the resin linear velocity, the distance from the die to the cooling medium, the temperature of the cooling medium, the cooling time, the take-off speed, the degree of stretching, the relaxation time and the average $L_1/D_1$ ratio, etc. so that the $L_{45}/D_{45}$ shrinkage rate obtained by the foregoing Equation (2) will be not less than 50%. Among these conditions, it is particularly preferable to appropriately adjust the degree of stretching, the distance from the die to the cooling medium, the relaxation times and/or the mean $L_4/D_4$ ratio. As described later, (a) the degree of stretching depends on the discharge quantity, the total area of the discharge holes, and the take-off speed, (b) the relaxation time depends on the distance from the die to the cooling medium and the take-off speed, and (c) the average $L_4/D_4$ ratio depends on the take-off speed and the shredding speed. Therefore, it is also a preferred aspect to appropriately adjust the discharge quantity, the total area of the discharge holes, the distance from the die to the cooling medium, the take-off speed, and the shredding speed.

The resin temperature is a temperature at which the polyolefin-based resin or the polyolefin-based resin composition containing the polyolefin-based resin is melt-kneaded. The resin temperature may also be referred to as "melt-kneading temperature" or "heating temperature". In a case where the polyolefin-based resin particles are produced with use of the extruder, the resin temperature can also be said to be a temperature of the melt-kneaded material (polyolefin-based resin composition) immediately before extrusion of the melt-kneaded material through the discharge holes provided in the die.

The resin temperature is not particularly limited. The resin temperature may be not lower than $(Tm_1+40)°C$ and not higher than $(Tm_1+110)°C$, provided that $[Tm_1(°C)]$ is the melting point of the polyolefin-based resin. It should be noted that the melting point of the polyolefin-based resin here is a value obtained as a result of differential scanning calorimetry (DSC) with use of a differential scanning calorimeter. The following describes a specific procedure: (1) 4 mg to 6 mg of the polyolefin-based resin having a temperature of 40°C is heated to 220°C at a temperature increase rate of 10°C/minute, so that the resin is melted; (2) thereafter, the resin having a temperature of 220°C is cooled to 40°C at a temperature decrease rate of 10°C/minute, so that the resin crystalizes; and (3) thereafter, the resin having a temperature of 40°C is heated to 220°C at a temperature increase rate of 10°C/minute. It is possible to obtain, as the melting point of the polyolefin-based resin, the temperature at a peak (melting peak) of a DSC curve obtained during the second temperature rise (i.e., the curve obtained during step (3)).

With regard to the polyolefin-based resin expanded particles produced from the polyolefin-based resin particles containing the polyolefin-based resin, the polyolefin-based resin expanded particles are different in structure from the polyolefin-based resin particles but are the same in composition as the polyolefin-based resin particles. Further, with regard to a polyolefin-based resin in-mold foamed molded product produced from the polyolefin-based resin expanded particles produced from the polyolefin-based resin particles, the polyolefin-based resin in-mold foamed molded product is different in structure from the polyolefin-based resin expanded particles but is the same in composition as the polyolefin-based resin expanded particles. Therefore, the value of the melting point obtained by analyzing the polyolefin-based resin expanded particles or the polyolefin-based resin in-mold foamed molded product can be regarded as a value of the melting point of the polyolefin-based resin contained in the polyolefin-based resin particles, which are a raw material of the polyolefin-based resin expanded particles or of the polyolefin-based resin in-mold foamed molded product.

In the present specification, the melting point of the polyolefin-based resin expanded particles or of the polyolefin-based resin in-mold foamed molded product is a value obtained as a result of measurement by a method (DSC) which is the same as that for the melting point of the polyolefin-based resin except that the polyolefin-based resin expanded particles or the polyolefin-based resin in-mold foamed molded product is/are used in place of the polyolefin-based resin particles.

The term "area per discharge hole" means an area of a cross-section (cross-sectional area) of each one of the one or more discharge holes provided in the die attached to the extruder in a case where the polyolefin-based resin particles are produced with use of the extruder. In the present specification, the term "cross section of a discharge hole" means a cross section obtained when the discharge hole is cut along a plane perpendicular to a direction (extrusion direction) in which the polyolefin-based resin composition (melt-kneaded material) is extruded. The area per discharge hole can be adjusted by changing the cross-sectional shape of the discharge hole, the cross-sectional diameter of the discharge hole, and/or the like. The area per discharge hole is not particularly limited, and may be 0.5 mm$^2$ to 8 mm$^2$.

The "discharge quantity" means the quantity of the polyolefin-based resin composition which is extruded per unit time from the extruder in a case where the extruder is used to produce the polyolefin-based resin particles. It can also be said that the discharge quantity is the total amount of the polyolefin-based resin composition which is extruded per unit time through the one or more discharge holes provided in the die attached to the extruder, in a case where the polyolefin-based resin particles are produced by the extruder.

The term "resin linear velocity" means the length in the extrusion direction of the polyolefin-based resin composition which is extruded per unit time through each one of the one or more discharge holes provided in the die attached to the extruder in a case where the polyolefin-based resin particles are produced with use of the extruder. In the present specification, the resin linear velocity is a value calculated by the following Equation (6):

$$\text{Resin linear velocity} = \text{discharge quantity}/(\text{density of polyolefin-based resin composition} \times \text{total area of discharge holes}) \cdots \text{Equation (6)}.$$

Here, the total area of the discharge holes is the sum of respective cross-sectional areas of the discharge holes provided in the die attached to the extruder. The "cross-sectional area of a discharge hole" may also be referred to as "area of the discharge hole". In a case where the die is provided with a plurality of discharge holes having respective cross-sectional areas equal to each other, the total area of the discharge holes can be obtained by multiplying the area per discharge hole by the number (total number) of the discharge holes.

The resin linear velocity is not particularly limited, and can be 3 m/min to 50 m/min, preferably 10 m/min to 50 m/min, more preferably 20 m/min to 40 m/min, and even more preferably 20 m/min to 30 m/min. As described above, the resin linear velocity can be adjusted by changing the discharge quantity and the total area of the discharge holes.

The "distance from the die to the cooling medium" means a distance from an end, in the extrusion direction, of the discharge hole of the die of the extruder to the cooling medium in a case where the polyolefin-based resin particles are produced with use of the extruder. In a case where the water tank having water therein as the cooling medium is used as the cooling device, the distance from the die to the cooling medium can also be said to be the distance from the end, in the extrusion direction, of the discharge hole provided in the die to the water surface in the water tank. The distance from the die to the cooling medium is not particularly limited. The distance may be more than 0 mm and less than 700 mm, preferably more than 0 mm and less than 100 mm, more preferably more than 0 mm and not more than 90 mm, and more preferably more than 0 mm and not more than 80 mm. The distance from the die to the cooling medium closer to 0 mm may make it more difficult to adjust the temperature of the die, which affects the resin temperature, and the temperature of the cooling medium. If the distance from the die to the cooling medium is 0 mm, adjustment of the temperature of the die and the temperature of the cooling medium may become particularly difficult since the die and the cooling medium are in contact with each other.

The temperature of the cooling medium can also be said to be water temperature, in a case where a water tank having water therein as the cooling medium is used as the cooling device. The temperature of the cooling medium is not particularly limited. The temperature may be not lower than $(Tm_1-150)°C$ and not higher than $(Tm_1-80)°C$, and preferably not lower than $(Tm_1-150)°C$ and not higher than $(Tm_1-100)°C$.

The term "cooling time" means a period of time in which the polyolefin-based resin composition exists in the cooling medium included in the cooling device. When the polyolefin-based resin composition is discharged from the cooling device into a gas phase for take-off and cutting, the cooling time may affect the surface temperature of the polyolefin-based resin composition discharged from the cooling device into the gas phase. The surface temperature of the polyolefin-based resin composition discharged from the cooling device into the gas phase is not particularly limited. The surface temperature may be not higher than $(Tm_1-70)°C$, and preferably not higher than $(Tmi-80)°C$.

The term "take-off speed" means the speed of take-off by the take-off device in a case where the polyolefin-based resin particles are produced with use of the take-off device. The take-off device may be, for example, a roller type take-off device in which take-off is carried out by a roller, and may be used to take off the polyolefin-based resin composition extruded through the one or more discharge holes provided in the die. The take-off speed may be the same as the resin linear velocity, or may be higher than the resin linear velocity. When the take-off speed is higher than the resin linear velocity, it can also be said that the polyolefin-based resin composition extruded through the one or more discharge holes provided in the die attached to the extruder is stretched. In other words, in the present method of producing resin particles, the polyolefin-based resin composition may be stretched.

The degree of stretching herein is defined as a value calculated by the following Equation (7):

$$\text{Degree of stretching = take-off speed - resin linear velocity} \cdots \text{Equation (7)}.$$

The degree of stretching is not particularly limited, and may be 10 m/min to 100 m/min, preferably 10 m/min to 80 m/min, more preferably 10 m/min to 70 m/min, more preferably 10 m/min to 60 m/min, and even more preferably 10 m/min to 50 m/min.

The term "relaxation time" means a period of time from the time when the polyolefin-based resin composition is extruded from the discharge holes provided in the die of the extruder to the time when the polyolefin-based resin composition comes in contact with the cooling medium in a case where the polyolefin-based resin particles are produced with use of the extruder and the take-off device. In the present specification, the relaxation time is a value calculated by the following Equation (8):

$$\text{Relaxation time = distance from die to cooling medium/take-off speed} \cdots \text{Equation (8)}.$$

The relaxation time is not particularly limited. The relaxation time may be more than 0 seconds and not more than 0.2000 seconds, preferably more than 0 seconds and not more than 0.1420 seconds, more preferably more than 0 seconds to not more than 0.1400 seconds, more preferably more than 0 seconds and not more than 0.1350 seconds, more preferably more than 0 seconds and not more than 0.1300 seconds, and even more preferably more than 0 seconds and not more than 0.1270 seconds, and still even more preferably 0.0100 seconds to 0.1270 seconds. The relaxation time closer to 0 seconds is more preferable. However, the relaxation time closer to 0 seconds may make it more difficult to adjust the temperature of the die, which affects the resin temperature, and the temperature of the cooling medium. In a case where the relaxation time is 0 seconds, the die and the cooling medium are in contact with each other. This may make it particularly difficult to adjust the temperature of the die and the temperature of the cooling medium.

The average $L_4/D_4$ ratio can be adjusted by appropriately changing the take-off speed and the shredding speed.

The term "shredding speed" means the speed of shredding in a case where the polyolefin-based resin composition taken off by the take-off device is shredded by the shredding device. In the case of using the shredding device which includes a blade such as a cutter, the shredding speed can also be said to be a rotation speed of the blade. When the take-off speed is high and the shredding speed is low, the polyolefin-based resin particles obtained have a large $L_4$, in other words, the polyolefin-based resin particles are long. As a result, the average $L_4/D_4$ ratio becomes large. When the take-off speed is low and the shredding speed is high, the polyolefin-based resin particles obtained have a small $L_4$, in other words, the polyolefin-based resin particles are short. As a result, the average $L_4/D_4$ ratio becomes small.

The following aspect is an example of a preferred aspect of the method of producing polyolefin-based resin particles in accordance with an embodiment of the present invention.

A method of producing polyolefin-based resin particles, including the steps of:

(a) preparing a polyolefin-based resin composition, by (i) melting by heating and (ii) kneading a blend containing a polyolefin-based resin in an extruder (resin composition preparing step);
(b) extruding the polyolefin-based resin composition thus prepared, through one or more discharge holes provided in a die attached to the extruder (extruding step);
(c) solidifying by cooling the polyolefin-based resin composition thus extruded, with use of a cooling device including a cooling medium (cooling step);
(d) taking off, into a gas phase, the polyolefin-based resin composition thus solidified, with use of a take-off device (take-off step); and
(e) shredding the polyolefin-based resin composition thus taken off, with use of a shredding device, and obtaining the polyolefin-based resin particles (shredding step),

in step (a), the blend being heated at a heating temperature of not lower than $(Tm_1+40)°C$ and not higher than $(Tm_1+110)°C$, where Tmi represents a melting point of the polyolefin-based resin,
an area per hole of the discharge holes in the extruding step being 0.5 mm$^2$ to 8 mm$^2$,
the cooling medium having a temperature of not lower than $(Tm_1-150)°C$ and not higher than $(Tm_1-100)°C$,
in step (d), the resin composition in the gas phase having a surface temperature of not higher than $(Tmi-70)°C$,
the polyolefin-based resin particles having an average $L_4/D_4$ ratio of 2.0 to 5.0,
a degree of stretching calculated by the following Equation (9) being 10 m/min to 100 m/min,

$$\texttt{the degree of stretching = take-off speed - resin linear velocity} \cdots \texttt{Equation (9)},$$

where:

the take-off speed is a speed per unit time at which the take-off device takes off the polyolefin-based resin composition in step (d); and
the resin linear velocity is a value calculated by the following Equation (10),

$$\texttt{the resin linear velocity = discharge quantity/(density of the polyolefin-based resin composition} \times \texttt{total area of the discharge holes)} \cdots \texttt{Equation (10)},$$

where:

the discharge quantity is an amount per unit time of the polyolefin-based resin composition extruded from the extruder in step (b); and
the total area of the discharge holes is the sum of areas of the one or more discharge holes provided in the die attached to the extruder, and is a value obtained by multiplying the area per hole of the discharge holes by the total number of the discharge holes provided in the die of the extruder; and

a relaxation time calculated by the following Equation (11) being more than 0 seconds and not more than 0.2000

seconds,

$$\text{the relaxation time} = \text{distance from the die to the cooling medium}/\text{the take-off speed} \cdots \text{Equation (11).}$$

The following aspect is an example of a preferred aspect of the method of producing polyolefin-based resin particles in accordance with another embodiment of the present invention.

A method of producing polyolefin-based resin particles, including the steps of:

(a) preparing a polyolefin-based resin composition, by (i) melting by heating and (ii) kneading a blend containing a polyolefin-based resin in an extruder (resin composition preparing step);
(b) extruding the polyolefin-based resin composition thus prepared, through one or more discharge holes provided in a die attached to the extruder (extruding step);
(c) solidifying by cooling the polyolefin-based resin composition thus extruded, with use of a cooling device including a cooling medium (cooling step);
(d) taking off, into a gas phase, the polyolefin-based resin composition thus solidified, with use of a take-off device (take-off step); and
(e) shredding the polyolefin-based resin composition thus taken off, with use of a shredding device, and obtaining the polyolefin-based resin particles (shredding step),

in step (a), the blend being heated at a heating temperature of not lower than $(Tm_1+40)°C$ and not higher than $(Tm_1+110)°C$, where Tmi represents a melting point of the polyolefin-based resin,
the cooling medium having a temperature of not lower than $(Tm_1-150)°C$ and not higher than $(Tm_1-100)°C$,
in step (d), the resin composition in the gas phase having a surface temperature of not higher than $(Tm_1-70)°C$,
the polyolefin-based resin particles having an average $L_4/D_4$ ratio of 2.0 to 5.0,
a degree of stretching calculated by the following Equation (15) being 10 m/min to 100 m/min,

$$\text{the degree of stretching} = \text{take-off speed} - \text{resin linear velocity} \cdots \text{Equation (15),}$$

where:

the take-off speed is a speed per unit time at which the take-off device takes off the polyolefin-based resin composition in step (d); and
the resin linear velocity is a value calculated by the following Equation (16),
the resin linear velocity = discharge quantity/ (density of the polyolefin-based resin composition $\times$ total area of the discharge holes) ... Equation (16),
where:

the discharge quantity is an amount per unit time of the polyolefin-based resin composition extruded from the extruder in step (b); and

the total area of the discharge holes is the sum of areas of the one or more discharge holes provided in the die attached to the extruder; and

a relaxation time calculated by the following Equation (17) being more than 0 seconds and not more than 0.2000 seconds,

$$\text{the relaxation time} = \text{distance from the die to the cooling medium}/\text{the take-off speed} \cdots \text{Equation (17),}$$

where the distance from the die to the cooling medium is more than 0 mm and less than 100 mm.
In a preferred aspect of the present production method as described above, it is possible to obtain, without use of a special composition as a resin composition of the polyolefin-based resin, polyolefin-based resin particles which can provide expanded particles that enable provision of a molded product excellent in surface property.

(Resin composition preparing step)

The resin composition preparing step is the step of preparing a polyolefin-based resin composition, which is a melt-kneaded material, by preparing a blend containing a polyolefin-based resin and then (i) melting by heating and (ii) kneading this obtained blend in an extruder. The extruder used in the resin composition preparing step is preferably a biaxial extruder. The foregoing description is referred to for the heating temperature (resin temperature) in the resin composition preparing step.

(Extruding step)

The extruding step is the step of extruding (discharging) the polyolefin-based resin composition, which is a melt-kneaded material, for example, in a strand form through one or more discharge holes provided in a die attached to the extruder. The forgoing descriptions are referred to for aspects of the die, the discharge holes, the discharge quantity, and the resin linear velocity.

(Cooling step)

The polyolefin-based resin composition having been extruded can be solidified by cooling with use of a cooling device. The foregoing descriptions are referred to for aspects of the cooling medium, the cooling device, the distance from the die to the cooling medium, and the cooling time.

(Take-off step)

In the take-off step, the polyolefin-based resin composition having been solidified is taken off from the cooling medium (cooling device) into a gas phase with use of a take-off device. The forgoing descriptions are referred to for aspects of the take-off device, the take-off speed, the degree of stretching, the surface temperature of the polyolefin-based resin composition expelled from the cooling device into the gas phase, and the relaxation time.

(Shredding step)

In the shredding step, the polyolefin-based resin composition is shredded, with use of a shredding device, into a desired shape such as a columnar shape, an elliptical shape, a spherical shape, a cuboid shape, or a rectangular parallelepiped shape. The forgoing descriptions are referred to for aspects of the shredding device, the shredding speed, and the average $L_4/D_4$ ratio.

[4. Polyolefin-based resin expanded particles]

The polyolefin-based resin expanded particles in accordance with an embodiment of the present invention are preferably expanded particles obtained by expanding the polyolefin-based resin particles described in the above section [2. Polyolefin-based resin particles]. In the present specification, the "polyolefin-based resin expanded particles in accordance with an embodiment of the present invention" is also referred to as "the present expanded particles".

Since the present expanded particles have the above configuration, the present expanded particles enables provision of a molded product excellent in surface property.

The present expanded particles are preferably expanded particle obtained by expanding the resin particles which are produced by the present method of producing resin particles described in the above section [3. Method of producing polyolefin-based resin particles].

A preferred aspect of the polyolefin-based resin expanded particles in accordance with an embodiment of the present invention includes, for example, the following aspect: expanded particles obtained by expanding polyolefin-based resin particles, in which: (a) the expansion ratio of the expanded particles is not less than 15 times; (b)(b-1) the polyolefin-based resin particles contain a polyolefin-based resin as a base material resin, and (b-2) the polyolefin-based resin particles have a weight per particle of not less than 0.5 mg/particle and not more than 5.0 mg/particle; and (c) an $L_{83}/D_{83}$ shrinkage rate calculated by the following Equation (18) is not less than 50%: $L_{83}/D_{83}$ shrinkage rate = 100 × (1 - (average $L_3/D_3$ ratio of the polyolefin-based resin expanded particles)/(average $L_8/D_8$ ratio of the polyolefin-based resin particles)) ... Equation (18).

(4-1. Average $L_3/D_3$ ratio)

The present expanded particles have an average $L_3/D_3$ ratio of preferably not less than 0.80 and less than 1.50, more preferably 0.80 to 1.20, even more preferably 0.90 to 1.20, still even more preferably 0.90 to 1.10, and particularly preferably 1.00. The average $L_3/D_3$ ratio closer to 1.00 has a better filling property in filling a mold with the expanded particles.

With regard to the present expanded particles, the descriptions of $L_2$, $D_2$ and the average $L_2/D_2$ ratio described in the above section (2-6. $L_{12}/D_{12}$ shrinkage rate) can be referred to for $L_3$, $D_3$ and the average $L_3/D_3$ ratio as appropriate.

Aspects of the $L_{83}/D_{83}$ shrinkage rate, the average $L_8/D_8$ ratio, $L_8$, and $D_8$ include preferred aspects, and may be the same as those of the $L_{12}/D_{12}$ shrinkage rate, the average $L_1/D_1$ ratio, $L_1$, and $D_1$ which are described in the above section [2. Polyolefin-based resin particles]. In other words, $L_8$, $D_8$, $L_3$, and $D_3$ may be described by replacing $L_8$ with $L_1$, $D_8$ with $D_1$, $L_3$ with $L_2$, and $D_3$ with $D_2$, respectively.

(4-2. Average $d_2/D_2$ ratio)

The present expanded particles have an average $d_2/D_2$ ratio of preferably 0.80 to 1.20, more preferably 0.90 to 1.10, even more preferably 0.95 to 1.05, and particularly preferably 1. The average $d_2/D_2$ ratio closer to 1 results in less unevenness of the expanded particles. Therefore, such an average $d_2/D_2$ ratio closer to 1 leads to a better filling property in filling a mold with the expanded particles.

The average $d_2/D_2$ ratio is an average value calculated from $d_2/D_2$ ratios of randomly chosen 10 particles of the polyolefin-based resin expanded particles.

The following will discuss $d_2$, with reference to Fig. 2. $d_2$ is an average value of the maximum diameter $d_2max$ and the minimum diameter $d_2min$ in the cross section perpendicular to the $L_2$ direction at the center in the $L_2$ direction of the polyolefin-based resin expanded particle as shown in each of (b) and (d) of Fig. 2. $d_2$ is a value calculated by the following Equation (12):

$$d_2 = (d_2max + d_2min)/2 \cdots \text{Equation (12)}.$$

As shown in (d) of Fig. 2, when the polyolefin-based resin particle has a substantially spherical shape, the central portion of the polyolefin-based resin particle in the $L_2$ direction may be the maximum diameter portion of the polyolefin-based resin particle. Therefore, $d_2$ and $D_2$ may be equal to each other. Further, as described above, respective values of $D_2max$ and $D_2min$ are equal to each other. Therefore, as shown in (d) of Fig. 2, when the polyolefin-based resin particle have a substantially spherical shape and the shape of the cross section perpendicular to the $L_2$ direction at the maximum diameter portion is circular, all values of $D_2max$, $D_2min$, $d_2max$ and $d_2min$ are equal to each other.

The average $d_2/D_2$ ratio can be adjusted by appropriately changing a period of time from addition of the blowing agent to expelling of the dispersion slurry in production of the expanded particles. The method of producing expanded particles will be described in detail later.

(4-3. Expansion ratio)

The expansion ratio of the present expanded particles is preferably not less than 15 times and not more than 25 times, more preferably not less than 17 times and not more than 22 times, even more preferably not less than 18 times and not more than 21 times, and particularly preferably not less than 19 times and not more than 20 times. (a) When the expansion ratio of the present expanded particles is not less than 15 times, it is possible to provide light-weight molded products with use of the expanded particles. (b) When the expansion ratio of the present expanded particles is not more than 25 times, it is possible to provide strong molded products with use of the expanded particles.

(4-4. Attached component on surface of expanded particles)

In production of the present expanded particles, in a case where a dispersing agent, a dispersion auxiliary agent, and/or the like is/are used, expanded particles having a surface to which the dispersing agent, the dispersion auxiliary agent, and/or the like is/are attached may be obtained. A substance attached to the surface of the expanded particles is also referred to as an attached component on an expanded particle surface. The type and the amount of the attached component on the expanded particles are not particularly limited. Depending on substances used in production of the expanded particles, various substances may be attached components. The present expanded particles may be, for example, expanded particles having a surface to which the dispersing agent used in production of the expanded particles is adhered.

(4-5. DSC curves)

It is possible to obtain a DSC curve by performing DSC for the polyolefin-based resin expanded particles. Specifically, it is possible to obtain a DSC curve by heating 5 mg to 6 mg of the polyolefin-based resin expanded particles, which have a temperature of 40°C, to 220°C at a temperature increase rate of 10°C/min with use of a differential scanning calorimeter.

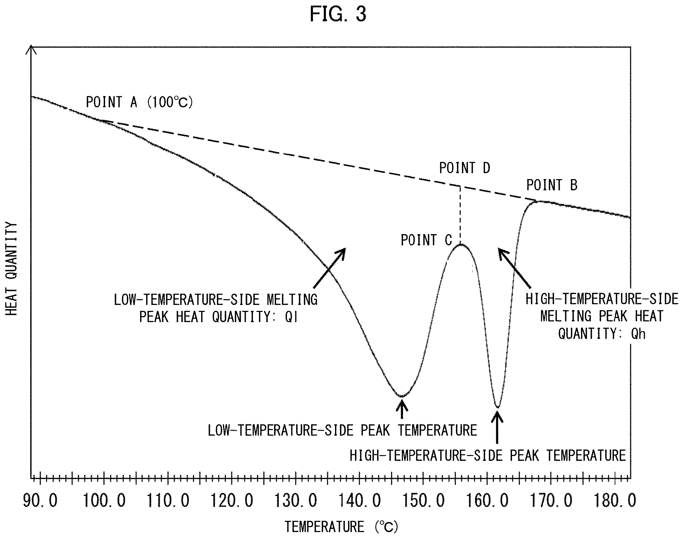

Fig. 3 shows an example of the DSC curve which is obtained by performing DSC in which the polyolefin-based resin expanded particles in accordance with an embodiment of the present invention having a temperature of 40°C are heated to 220°C at a temperature increase rate of 10°C/min. In Fig. 3, the horizontal axis represents temperature, and the vertical axis represents heat quantity. It should be noted that an upward shift on the vertical axis indicates heat generation and a downward shift on the vertical axis indicates heat absorption. The DSC curve shown in Fig. 3 can also be said to be a DSC curve during a first temperature rise. The DSC curve shown in Fig. 3 has two peaks. Each of these two peaks is a melting peak and an endothermic peak.

In the DSC curve obtained as a result of performing DSC for the polyolefin-based resin expanded particles in accordance with an embodiment of the present invention, the polyolefin-based resin expanded particles preferably have two melting peaks as illustrated in Fig. 3. The polyolefin-based resin expanded particles having the two melting peaks in this way can be produced by a well-known method.

The following will describe Fig. 3 in more detail. In Fig. 3, there are two melting peaks. One of the two melting peaks on a lower temperature side is referred to as "low-temperature-side melting peak" and the temperature of this peak is referred to as "low-temperature-side peak temperature". The other one of the two melting peaks on a higher temperature side is referred to as a high-temperature-side melting peak, and the temperature of this peak is referred to as "high-temperature-side peak temperature". Fig. 3 shows some points on the DSC curve during the first temperature rise of the polyolefin-based resin expanded particles. The following will discuss the points. Point A indicates a heat absorption quantity at a temperature of 100°C. Point B indicates a heat absorption quantity at a temperature at which melting on the higher temperature side ends. Point B can also be said to be an intersection of a line toward the higher temperature side from the high-temperature-side melting peak and a high-temperature-side baseline (which is also a baseline at which the melting ends). Point C indicates a point at which the heat absorption quantity is minimum between the two melting peaks of the low-temperature-side melting peak and the high-temperature-side melting peak. Point D indicates an intersection between a line segment AB and a straight line obtained by drawing a straight line parallel the Y axis from point C. The heat quantity based on an area enclosed by the low-temperature-side melting peak, the line segment AD, and the line segment CD is referred to as "low-temperature-side melting peak heat quantity (Ql)". The heat quantity based on an area enclosed by the high-temperature-side melting peak, the line segment BD, and the line segment CD is referred to as "high-temperature-side melting peak heat quantity (Qh)". The sum of the low-temperature-side melting peak heat quantity (Ql) and the high-temperature-side melting peak heat quantity (Qh) is an entire melting peak heat quantity.

(4-6. DSC ratio)

The ratio of the high-temperature-side melting peak heat quantity (Qh) with respect to the entire melting peak heat quantity is referred to as a "DSC ratio" or a "high-temperature heat quantity ratio". The DSC ratio is expressed by the following Equation (13).

$$\text{DSC ratio (\%)} = (Qh/(Ql + Qh)) \times 100 \cdots \text{Equation (13)}.$$

The polyolefin-based resin expanded particles in accordance with an embodiment of the present invention have a DSC ratio of preferably not less than 10% and not more than 50%, and more preferably not less than 15% and not more than 45%. When the DSC ratio is within such ranges, there is an advantage that a wide range of molding process conditions can be selected in in-mold foam molding using the polyolefin-based resin expanded particles. Note that with regard to a molded product produced from the polyolefin-based resin expanded particles, the molded product is different in structure from the polyolefin-based resin expanded particles but is the same in composition as the polyolefin-based resin expanded particles. Accordingly, the value of the DSC ratio of the polyolefin-based resin in-mold foamed molded product can be considered to be the same as the DSC ratio of the polyolefin-based resin expanded particles which are a raw material of the molded product. The DSC ratio of the polyolefin-based resin in-mold foamed molded product can be obtained from a DSC curve (specifically, a DSC curve during the first temperature rise) which is obtained by DSC similar to that for the polyolefin-based resin expanded particles.

(4-7. Method of producing expanded particles)

The present method of obtaining expanded particles is not particularly limited. The present expanded particles are preferably produced by the method of producing polyolefin-based resin expanded particles described in the following [5. Method of producing polyolefin-based resin expanded particles].

[5. Method of producing polyolefin-based resin expanded particles]

A method of producing polyolefin-based resin expanded particles in accordance with an embodiment of the present invention includes the steps of: preparing a dispersion slurry by mixing polyolefin-based resin particles, a dispersion medium, and a blowing agent in a container (dispersion slurry preparing step); and expelling the dispersion slurry into an area having a pressure lower than an internal pressure of the container, and obtaining the polyolefin-based resin expanded particles having an expansion ratio of not less than 15 times (expelling step), the polyolefin-based resin expanded particles having an $L_{67}/D_{67}$ shrinkage rate of not less than 50%, the $L_{67}/D_{67}$ shrinkage rate being calculated by the foregoing Equation (3). In the present specification, the term "method of producing polyolefin-based resin expanded particles in accordance with an embodiment of the present invention" is also referred to as "the present method of producing expanded particles".

Since the present method of producing expanded particles has the above configuration, it is possible to obtain, without use of a special composition as a resin composition of the polyolefin-based resin, polyolefin-based resin expanded particles that enable provision of a molded product excellent in surface property.

The present method of producing expanded particles is suitably used for producing the present expanded particles described in the above section [4. Polyolefin-based resin expanded particles]. An aspect of the polyolefin-based resin particles in the present method of producing expanded particles includes a preferred aspect, and may be the same as that of the polyolefin-based resin particles described in the above section [2. Polyolefin-based resin particles]. An aspect of the polyolefin-based resin expanded particles in the present method of producing expanded particles includes a preferred aspect, and may be the same as that of the polyolefin-based resin expanded particles described in the above section [4. Polyolefin-based resin expanded particles].

The method of producing polyolefin-based resin expanded particles in accordance with an embodiment of the present invention also includes, for example, the following aspect.

A method of producing polyolefin-based resin expanded particles including the steps of: preparing polyolefin-based resin particles (resin particle preparing step); preparing a dispersion slurry by mixing the polyolefin-based resin particles, a dispersion medium, and a blowing agent in a container (dispersion slurry preparing step); and expelling the dispersion slurry into an area having a pressure lower than an internal pressure of the container, and obtaining the polyolefin-based resin expanded particles having an expansion ratio of not less than 15 times (expelling step), the resin particle preparing step including the sub-steps of: preparing the polyolefin-based resin composition, by (i) melting by heating and (ii) kneading a blend containing a polyolefin-based resin in an extruder (resin composition preparing sub-step); extruding the polyolefin-based resin composition thus prepared, through one or more discharge holes provided in a die attached to the extruder (extruding sub-step); solidifying by cooling the polyolefin-based resin composition thus extruded, with use of a cooling device including a cooling medium (cooling sub-step); taking off, into a gas phase, the polyolefin-based resin composition thus solidified, with use of a take-off device (take-off sub-step); and shredding the polyolefin-based resin composition thus taken off, with use of a shredding device, and obtaining the polyolefin-based resin particles (shredding sub-step), in the resin composition preparing sub-step, the blend being heated at a heating temperature of not lower than $(Tm_1+40)°C$ and not higher than $(Tm_1+110)°C$, where $Tm_1$ represents a melting point of the polyolefin-based resin, the cooling medium having a temperature of not lower than $(Tm_1-150)°C$ and not higher than $(Tm_1-100)°C$, in the take-off sub-step, the resin composition in the gas phase having a surface temperature of not higher than $(Tm_1-70)°C$, the polyolefin-based resin particles having an average $L_6/D_6$ ratio of 2.0 to 5.0, a degree of stretching calculated by the following Equation (15) being 10 m/min to 100 m/min, the degree of stretching = take-off speed - resin linear velocity ... Equation (15), where: the take-off speed is a speed per unit time at which the take-off device takes off the polyolefin-based resin composition in the take-off step; and the resin linear velocity is a value calculated by the following Equation (16), the resin linear velocity = discharge quantity/ (density of the polyolefin-based resin composition $\times$ total area of the discharge holes) ... Equation (16), where: the discharge quantity is an amount per unit time of the polyolefin-based resin composition extruded from the extruder in the extruding sub-step, the total area of the discharge holes is the sum of areas of the one or more discharge holes provided in the die attached to the extruder; and a relaxation time calculated by the following Equation (17) being more than 0 seconds and not more than 0.2000 seconds, the relaxation time = distance from the die to the cooling medium/the take-off speed ... Equation (17), where the distance from the die to the cooling medium is more than 0 mm and less than 100 mm.

An aspect of each sub-step included in the resin particle preparing step includes a preferred aspect, and may be the same as each step described in the above section [3. Method of producing polyolefin-based resin particles].

(5-1. $L_{67}/D_{67}$ shrinkage rate)

Aspects of the $L_{67}/D_{67}$ shrinkable rate, the average $L_6/D_6$ ratio, and an average $L_7/D_7$ ratio in the present method of producing expanded particles include preferred aspects, and may be the same as those of the $L_{12}/D_{12}$ shrinkage rate described above. In other words, $L_6$, $D_6$, $L_7$ and $D_7$ may be described by replacing $L_6$ with $L_1$, $D_6$ with $D_1$, $L_7$ with $L_2$, and $D_7$ with $D_2$, respectively.

(5-2. Container)

The container is not particularly limited. The container is preferably a container which can withstand the expansion temperature and the expansion pressure in production of the expanded particles, and more preferably a pressure-resistant vessel. Possible examples of the container include an autoclave-type pressure-resistant vessel. The expansion temperature and the expansion pressure will be detailed later.

(5-3. Dispersion medium)

The dispersion medium is not particularly limited. The dispersion medium is preferably an aqueous dispersion medium, and it is preferable to use water alone as the dispersion medium. In the present method of producing expanded particles, it is possible to use a dispersion medium obtained by adding methanol, ethanol, ethylene glycol, glycerin, or the like to water.

The amount of the dispersion medium used is preferably not less than 100 parts by weight, and more preferably not less than 130 parts by weight, with respect to 100 parts by weight of the polyolefin-based resin particles. When the amount of the dispersion medium used is not less than 100 parts by weight with respect to 100 parts by weight of the polyolefin-based resin particles, the dispersibility of the polyolefin-based resin particles in the dispersion slurry becomes better as the amount of the dispersion medium used increases.

In the present method of producing expanded particles, in a case where the polyolefin-based resin particles contain a hydrophilic compound and the dispersion medium contains water, it is possible to cause the water in the dispersion medium to act as the blowing agent. As a consequence, the expansion ratio of the expanded particles obtained can be improved.

(5-4. Blowing agent)

Examples of the blowing agent include aliphatic hydrocarbons, halogenated hydrocarbons, and inorganic gases. Examples of the aliphatic hydrocarbons include propane, butane, isobutane, pentane, and isopentane. Examples of the halogenated hydrocarbons include monochloromethane, dichloromethane, and dichlorodifluoroethane. Examples of the inorganic gases include air, nitrogen, and carbon dioxide. It is possible to use, as the blowing agent, for example, the water contained in the dispersion medium. Each of these blowing agents can be used alone or in combinations of two or more. In the present method of producing expanded particles, the blowing agent is preferably an inorganic gas and/or water since the inorganic gas and/or water have no adverse effect on the environment. The blowing agent is preferably air and/or carbon dioxide gas, and more preferably carbon dioxide gas.

The amount of the blowing agent used varies depending on the type of the polyolefin-based resin used, the type of the blowing agent, a target expansion ratio, and/or the like, and cannot be generally defined. It is preferable that, for example, the amount of the blowing agent used be preferably not less than 2 parts by weight and not more than 60 parts by weight, with respect to 100 parts by weight of the polyolefin-based resin particles.

(5-5. Dispersing agent)

In the present method of producing expanded particles, it is possible to use a dispersing agent. In a case where the dispersing agent is used in the dispersion slurry preparing step of the present method of producing expanded particles, it is possible to (a) prevent agglomeration of the polyolefin resin particles in the dispersion slurry and/or (b) prevent agglomeration of the polyolefin resin particles after expelling the dispersion slurry.

Examples of the dispersing agent include, but are not particularly limited to, inorganic dispersing agents such as tricalcium phosphate, trimagnesium phosphate, calcium pyrophosphate, basic magnesium carbonate, calcium carbonate, barium sulfate, and silicate. Examples of the silicate include clay minerals such as kaolin, talc, and clay. Each of these dispersing agents can be used alone, or in combinations of two or more.

The amount of the dispersing agent used is not particularly limited, and may be appropriately changed depending on the type of the dispersing agent. The amount of the dispersing agent used is, for example, preferably not less than 0.01 parts by weight and not more than 3.00 parts by weight, with respect to 100 parts by weight of the polyolefin-based resin particles. (a) In a case where the amount of the dispersing agent used is not less than 0.01 parts by weight with respect to 100 parts by weight of the polyolefin-based resin particles, the possibility of agglomeration of the polyolefin-based resin particles decreases in production of the expanded particles as the amount of the dispersing agent increases. On the other hand, (b) in a case where the amount of the dispersing agent used is not more than 3.00 parts by weight, the amount of the dispersing agent remaining on the surface of the expanded particles obtained decreases as the amount of the dispersing agent used decreases. As a result, a molded product produced from the expanded particles obtained in the case (b) is likely to have good fusibility.

(5-6. Dispersion auxiliary agent)

The present method of producing expanded particles may use a dispersion auxiliary agent. In a case where the dispersion auxiliary agent is used in the dispersion slurry preparing step of the present method of producing expanded particles, it is possible to (a) prevent agglomeration of the polyolefin resin particles in the dispersion slurry and/or (b) prevent agglomeration of the polyolefin resin particles after expelling the dispersion slurry.

The dispersion auxiliary agent is preferably used together with the dispersing agent. In a case where the dispersing agent and the dispersion auxiliary agent are used in the dispersion slurry preparing step of the present method of producing expanded particles, it is possible to (a) further prevent agglomeration of the polyolefin resin particles in the dispersion slurry and/or (b) further prevent agglomeration of the polyolefin resin particles after expelling the dispersion slurry.

Examples of the dispersion auxiliary agent include, but are not limited to, anionic surfactants. Examples of the anionic surfactants include: (a) surfactants of carboxylate type; (b) surfactants of sulfonate type such as alkyl sulfonates, n-paraffin sulfonates, alkyl benzene sulfonates, alkyl naphthalene sulfonates, and sulfosuccinates; (c) surfactants of sulfate type such as sulfonated oil, alkyl sulfates, alkyl ether sulfates, and alkyl amide sulfates; and (c) surfactants of phosphate type such as alkyl phosphates, polyoxyethylene phosphates, and alkyl allyl ether sulfates. Each of these dispersion auxiliary agents can be used alone, or in combinations of two or more.

The amount of the dispersion auxiliary agent used is not particularly limited, and may be appropriately changed depending on the type of the dispersion auxiliary agent. The amount of the dispersion auxiliary agent used is, for example, preferably not less than 0.001 parts by weight and not more than 0.100 parts by weight, preferably not less than 0.001 parts by weight and not more than 0.050 parts by weight, and more preferably not less than 0.002 parts by weight and not more than 0.040 parts by weight, with respect to 100 parts by weight of the polyolefin-based resin particles. (a) In a case where the amount of the dispersion auxiliary agent used is not less than 0.001 parts by weight with respect to 100 parts by weight of the polyolefin-based resin particles, the possibility of agglomeration of the polyolefin-based resin particles decreases in production of expanded particles as the amount of the dispersion auxiliary agent increases. On the other hand, (b) in a case where the amount of the dispersing agent used is not more than 0.100 parts by weight, the amount of the dispersing agent remaining on the surface of the expanded particles obtained decreases as the amount of the dispersion auxiliary agent used decreases. This leads to good fusibility of a molded product produced from the expanded particles thus obtained in the case (b).

(5-7. Dispersion slurry preparing step)

The dispersion slurry preparing step may be carried out by adding and mixing together, in a container, the polyolefin-based resin particles, the dispersion medium and the blowing agent and optionally the dispersing agent, the dispersion auxiliary agent, and/or the like. There is no particular limitation on the order of adding, in the container, the polyolefin-based resin particles, the dispersion medium and the blowing agent, and optionally the dispersing agent, the dispersion auxiliary agent, and/or the like. Such raw materials added are mixed together in a manner that is not particularly limited. The raw materials are mixed, for example, by stirring the raw materials with use of a stirring blade or the like provided in the container.

(5-8. Expelling step)

The expelling step may be carried out, for example, by preliminarily raising the internal pressure of the container to a pressure higher than atmospheric pressure, and then expelling the dispersion slurry under atmospheric pressure so as to obtain the polyolefin-based resin expanded particles having an expansion ratio of not less than 15 times. The pressure lower than the internal pressure of the container is preferably atmospheric pressure.

(5-9. Heating step and pressurizing step)

The temperature and the pressure in the container at the time when the dispersion slurry is expelled into an area having a pressure lower than the internal pressure of the container are referred to as "expansion temperature" and "expansion pressure", respectively. The present method of producing expanded particles may further include a heating step of raising the temperature in the container to the expansion temperature (heating) and/or a pressurizing step of raising the internal pressure of the container to the expansion pressure (pressurizing).

(5-10. Expansion temperature)

The expansion temperature varies depending on the type of the polyolefin-based resin used, the type and/or amount of the resin particle additive kneaded into (used in) the polyolefin-based resin, and the type and/or amount of the blowing agent, and is therefore cannot be generally defined. The expansion temperature is preferably not lower than $Tm_2$-30($°C$) and not higher than $Tm_2$+10($°C$) when the melting point of the polyolefin-based resin particles is defined as $[Tm_2(°C)]$.

In the present specification, the melting point $Tm_2$ of the polyolefin-based resin particles is defined as a value obtained as a result of measurement by a method (DSC) which is the same as that for the melting point $Tm_1$ of the polyolefin-based resin except that the polyolefin-based resin particles are used in place of the polyolefin-based resin.

With regard to the polyolefin-based resin particles produced from the polyolefin-based resin, the polyolefin-based resin particles are different in structure from the polyolefin-based resin but are the same in composition as the polyolefin-based resin. Therefore, in an embodiment of the present invention, the melting point $Tm_2$ of the polyolefin-based resin particles may be the same as the melting point $Tm_1$ of the polyolefin-based resin used in production of the polyolefin-based resin particles.

(5-11. Expansion pressure)

The expansion pressure varies depending on a desired expansion ratio of the polyolefin-based resin expanded particles, and therefore cannot be generally defined. The expansion pressure is preferably not lower than 0.50 MPa·G and not higher than 6.0 MPa·G, and more preferably not lower than 1.0 MPa·G and not higher than 4.5 MPa·G. (a) When the expansion pressure is not lower than 0.50 MPa·G, there is no possibility that the expansion ratio becomes too low. On the other hand, (b) when the expansion pressure is not higher than 6.0 MPa·G, there is no possibility that the average cell diameter of the expanded particles obtained decreases, so that there is no possibility of deterioration in moldability.

In a case where the dispersion slurry containing the polyolefin-based resin particles is expelled from inside the container into an area having a pressure lower than the internal pressure of the container, the dispersion slurry can be expelled through an open orifice of 2 mmφ to 10mmφ for adjusting the amount (flow rate) of the dispersion slurry expelled, for reducing variation in expansion ratio of the expanded particles to be obtained, and/or the like purpose. The "area having a pressure lower than the internal pressure of the container" is also referred to as a "low pressure atmosphere". In the present method of producing expanded particles, in order to increase the expansion ratio, the temperature in the low pressure atmosphere may be adjusted when the dispersion slurry in the container is expelled into the low pressure atmosphere.

The dispersion slurry prepared in the container may be heated to the expansion temperature and pressurized to the expansion pressure at the same time, while being stirred. Then, the dispersion slurry is maintained at the expansion temperature and the expansion pressure for a certain period of time. The certain period time is typically 5 minutes to 180 minutes, and preferably 10 minutes to 60 minutes. The dispersion slurry, which has been maintained at the expansion temperature and the expansion pressure for the certain period of time, is then expelled into a low pressure atmosphere (usually under atmospheric pressure) by opening a valve provided at a lower part of the container. As a result, the polyolefin-based resin expanded particles can be produced.

Examples of a preferred aspect of the present method of producing expanded particles include the following aspect including (D1) to (D5): (D1) a dispersion slurry is prepared by (i) putting, in a container provided with a stirring blade, polyolefin-based resin particles, a dispersion medium and a blowing agent, and optionally a dispersing agent, a dispersion auxiliary agent, and/or the like, and (ii) mixing these raw materials together (dispersion slurry preparing step); (D2) the polyolefin-based resin particles in the dispersion slurry are dispersed in the container, by stirring the dispersion slurry with use of the stirring blade; (D3) after stirring or concurrently with stirring, the temperature and the pressure in the container are increased to the expansion temperature (not lower than the softening point of the polyolefin-based resin particles) and the expansion pressure, respectively; (D4) subsequently, the temperature and the pressure in the container are maintained at the expansion temperature and the expansion pressure for a certain period of time as needed; and (D5) thereafter, the dispersion slurry in the container is expelled into an area having a pressure lower than the internal pressure of the container (e.g., under atmospheric pressure) and the polyolefin-based resin particles are expanded, so that polyolefin-based resin expanded particles having an expansion ratio of not less than 15 times are obtained (expelling step).

Further, the following aspect including (E1) to (E3) is also a preferred aspect. That is, (E1) polyolefin-based resin particles and a dispersion medium, and optionally a dispersing agent, a dispersion auxiliary agent, and/or the like are put in a container provided with a stirring blade. Thereafter, while (E2) a resultant mixture is stirred by using the stirring blade, one of the following (E3a) to (E3c) is carried out as (E3).

(E3a) A vacuum is drawn in the container as needed, and a dispersion slurry is prepared by introducing a blowing agent at not lower than 0.3 MPa·Gand not higher than 2.5 MPa·G (dispersion slurry preparing step). Then, the temperature in the container is increased to a temperature not lower than the softening temperature of the polyolefin-based resin. As a result of raising the temperature, the pressure in the container rises to approximately not lower than 1.0 MPa·Gand not higher than 5.0 MPa·G. The blowing agent is further added as needed, at a temperature close to the expansion temperature, so that the pressure in the container is adjusted to a desired expansion pressure. Furthermore, the temperature in the container is adjusted to a desired expansion temperature. Thereafter, the temperature and the pressure are maintained at the expansion temperature and the expansion pressure, respectively, for a certain period of time. Subsequently, the dispersion slurry is expelled into an area having a pressure lower than the internal pressure of the container, so that the polyolefin-based resin expanded particles are obtained (expelling step).

(E3b) A vacuum is drawn in the container as needed.

Then, while the temperature inside the container is raised to a temperature close to the expansion temperature of the polyolefin-based resin, a blowing agent is introduced as appropriate so that the pressure in the container becomes a desired expansion pressure. As a result, a dispersion slurry is prepared (dispersion slurry preparing step). Thereafter, the temperature in the container is maintained at a temperature close to the expansion temperature for a certain period of time. Then, the dispersion slurry is expelled into an area having a pressure lower than the internal pressure of the container, so that the polyolefin-based resin expanded particles are obtained (expelling step).

(E3c) After the temperature in the container is increased to a temperature close to the expansion temperature, a blowing agent is introduced so that the pressure in the container becomes a desired expansion pressure. As a result, a dispersion slurry is prepared (dispersion slurry preparing step). Thereafter, the temperature in the container is maintained at a temperature close to the expansion temperature for a certain period of time. Then, the dispersion slurry is expelled into an area having a pressure lower than the internal pressure of the container, so that the polyolefin-based resin expanded particles are obtained (expelling step).

It should be noted that it is possible to regulate (control) a pressure-releasing speed during expansion (during expelling), by injecting, into the container, a substance used as the blowing agent and increasing the internal pressure of the container prior to expelling the dispersion slurry into an area having a pressure lower than that in the container. It is also possible to regulate (control) the pressure during expansion (expelling), by introducing, into the container, a substance used as the blowing agent during expelling of the dispersion slurry into the area having a pressure lower than the pressure in the container. Regulating the pressure during expansion (expelling) in this way makes it possible to adjust the expansion ratio.

The above-described process of producing polyolefin-based resin expanded particles from polyolefin-based resin particles is referred to as a "first-step expansion process," and the polyolefin-based resin expanded particles thus obtained are referred to as "first-step expanded particles". The present method of producing expanded particles is a method of obtaining expanded particles having an expansion ratio of at least 15 times in the first-step expansion process. In other words, in an embodiment of the present invention, the expansion ratio of the first-step expanded particles is not less than 15 times.

In order to obtain polyolefin-based resin expanded particles having a high expansion ratio, it is possible to use a method in which a large amount of the blowing agent is used during the first-step expansion process (this method is hereinafter referred to as "Method 1"). Examples of methods other than the Method 1 which can be used include a method in which polyolefin-based resin expanded particles (first-step expanded particles) having a relatively low expansion ratio (an expansion ratio of approximately 15 times to 35 times) are obtained in the first-step expansion process, and thereafter, the polyolefin-based resin expanded particles are expanded again so that the expansion ratio becomes higher (this method is hereinafter referred to as "Method 2"). In the present specification, the term "expansion ratio" refers to an absolute expansion ratio which can be calculated from (i) the density of the polyolefin-based resin (a) before expansion, (ii) the weight of the polyolefin-based resin expanded particles, and (iii) the volume of the polyolefin-based resin expanded particles found by submerging the polyolefin-based resin expanded particles in water (or in ethanol).

Examples of Method 2 include a method including the following steps (i) to (iii). (i) In a first-step expansion process, the first-step expanded particles having an expansion ratio of 15 times to 35 times are produced. (ii) The first-step expanded particles are placed into a pressure-resistant vessel, and the pressure inside the first-step expanded particles (hereinafter, also referred to as "internal pressure") is increased to greater than normal pressure by carrying out a pressure treatment at not lower than 0.1 MPa·Gand not higher than 0.6 MPa·G with use of e.g. nitrogen, air, or carbon dioxide, (iii) Thereafter, the first-step expanded particles are further expanded by heating the particles with use of, for example, steam. A step of increasing the expansion ratio of first-step expanded particles as in Method 2 is referred to here as a "second-step expansion process", and the polyolefin-based resin expanded particles obtained via the Method 2 are referred to as "second-step expanded particles".

[6. Method of producing polyolefin-based resin in-mold foamed molded product]

The polyolefin-based resin in-mold foamed molded product in accordance with an embodiment of the present invention is preferably a molded product obtained by subjecting, to in-mold foam molding, the polyolefin-based resin expanded particles described in the above section [4. Polyolefin-based resin expanded particles]. In the present specification, the "polyolefin-based resin in-mold foamed molded product in accordance with an embodiment of the present invention" is also referred to as "the present molded product".

Since the present molded product has the above configuration, the present molded product advantageously has an excellent surface property.

The present molded product is preferably a molded product obtained by in-mold foam molding of the expanded particles produced by the present method of producing expanded particles described in the above section [3. Method of producing polyolefin-based resin particles].

(6-1. Surface integrity of molded product)

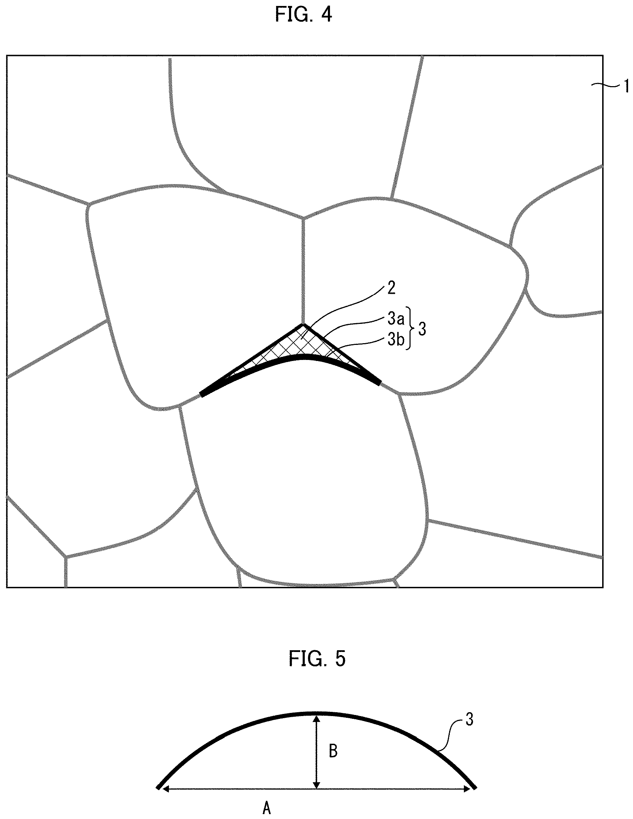

The surface integrity of the present molded product can be evaluated on the basis of an inter-particle state on the surface of the molded product. The following will discuss the inter-particle state on the surface of the molded product, with reference to Fig. 4. Fig. 4 is a diagram showing an example of an enlarged portion of the surface of a polyolefin-based resin in-mold foamed molded product. Fig. 4 shows 14 polyolefin-based resin expanded particles 1 (among which three particles can be seen in whole), and an inter-particle gap 2 which is formed between the three polyolefin-based resin expanded particles 1. The inter-particle gap 2 is indicated by shading (hatching). In Fig. 4, a line between each of the three polyolefin-based resin expanded particles 1 and the inter-particle gap 2, that is, lines forming the inter-particle gap 2 are each referred as "boundary line 3". For convenience of explanation, Fig. 4 shows boundary lines 3 by black lines, and shows the other lines (outlines of the polyolefin-based resin expanded particles 1) by gray lines. As shown in Fig. 4, the inter-particle gap 2 formed between the three polyolefin-based resin expanded particles 1 is formed by three boundary lines 3. Two of the three boundary lines 3 are straight boundary lines 3a and the remaining one of the three boundary lines 3 is a non-straight boundary line 3b. In Fig. 4, the non-straight boundary line 3b is shown by a thicker line than the straight boundary lines 3a. As shown in Fig. 4, a boundary line 3 which is derived from one polyolefin-based resin expanded particle 1 is defined as one boundary line 3.

The following will discuss such a boundary 3 more specifically, with reference to Fig. 5. Fig. 5 shows an example of the boundary line 3. As shown in Fig. 5, the width of the boundary line 3 is defined as "width A of a boundary line (width A of the boundary line 3)", and the height of the boundary line 3 is defined as "height B of the boundary line (height B of the boundary line 3)". The width A of the boundary line 3 means the length of a line segment connecting one end to the other end of the boundary line 3. The width A of the boundary line 3 can also be said to be the shortest distance from the one end to the other end of the boundary line 3. Suppose a case where (i) perpendiculars are drawn with respect to the line segment connecting the one end to the other end of the boundary line 3 and (ii) respective portions of the perpendiculars between the boundary line 3 and the line segment connecting the one end to the other end of the boundary line 3 are cut out. In this case, the height B of the boundary line 3 can also be said to be the length of the longest portion among the portions of the perpendiculars. In the present specification, when R calculated by the following Equation (14) is less than 1.5, the boundary line 3 is regarded as a "straight boundary line", and when R is not less than 1.5, the boundary line 3 is regarded as a "non-straight boundary line".

$$R = \frac{2 \times \sqrt{\left(\frac{A}{2}\right)^2 + B^2}}{A} \quad \cdots \text{ Equation (14)}$$

The inter-particle gap may be formed on the surface of the present molded product. It is preferable that no inter-particle gap be formed on the surface of the present molded product. It can be said that a molded product having a surface where no inter-particle gap is formed is excellent in surface integrity. In a case where there is/are an inter-particle gap(s) formed on the surface of a molded product, it is preferable that respective boundary lines between the inter-particle gap and expanded particles be straight lines. In a case where there is/are an inter-particle gap(s) formed on the surface of a molded product, it is more preferable to have a smaller number of non-straight boundary lines between the inter-particle gap(s) and expanded particles. When the boundary lines between the inter-particle gap(s) and the expanded particles are straight lines, the molded product is considered to be good in surface integrity. The following will discuss a case where an inter-particle gap(s) is/are found on a surface of a molded product in observation of an inter-particle state per 20 particles on the surface of the molded product. In the observation of the inter-particle state per 20 particles, the number of non-straight boundary lines between the inter-particle gap(s) and the expanded particles is preferably not more than 8, more preferably not more than 6, and even more preferably not more than 3.

(6-2. Method of producing molded product)

Examples of the present method for producing a molded product (in-mold foam molding method) include the following methods (A) to (C):

(A) a method including the steps of (i) giving a predetermined internal pressure to expanded particles, by pressurizing the expanded particles and an inorganic gas so that the expanded particles are impregnated with the inorganic gas, (ii) then filling a mold with the expanded particles, and (iii) thereafter heating the mold and the expanded particles with use of steam so that the expanded particles fuse together;

(B) a method including the steps of (i) filling a mold with expanded particles compressed by gas pressure, and (ii) next, fusing the expanded particles together, by heating the mold and the expanded particles with use of steam as well as utilizing restoration force of the expanded particles with which the mold is filled; and

(C) a method including the steps of (i) filling a mold with expanded particles without any particular preprocessing, and (ii) next, fusing the expanded particles together, by heating the mold and the expanded particles with use of steam.

There is no particular limit on bulk density of the present molded product. The bulk density of the present molded product is preferably not less than 15 g/L and not more than 350 g/L, and more preferably not less than 20 g/L and not more than 300 g/L.

An embodiment of the present invention may be configured as follows.

[1] Polyolefin-based resin particles containing a polyolefin-based resin as a base material resin, the polyolefin-based resin particles having:

a weight per particle of not less than 0.5 mg/particle and not more than 5.0 mg/particle; and

an $L_{12}/D_{12}$ shrinkage rate of not less than 50%, the $L_{12}/D_{12}$ shrinkage rate being calculated by the following Equation (1):

$L_{12}/D_{12}$ shrinkage rate = $100 \times$ (1 - (average $L_2/D_2$ ratio of polyolefin-based resin expanded particles)/ (average $L_1/D_1$ ratio of the polyolefin-based resin particles)) ... Equation (1),

where the polyolefin-based resin expanded particles are obtained by expanding the polyolefin-based resin particles and have an expansion ratio of not less than 15.

[2] The polyolefin-based resin particles as described in [1], wherein the average $L_1/D_1$ ratio of the polyolefin-based resin particles is 2.0 to 5.0.

[3] Polyolefin-based resin expanded particles obtained by expanding polyolefin-based resin particles as described in [1] or [2].

[4] The polyolefin-based resin expanded particles as described in [3], having an average $L_3/D_3$ ratio of not less than 0.8 and less than 1.5.

[5] The polyolefin-based resin expanded particles as described in [3] or [4] having an expansion ratio of not less than 15 and not more than 25.

[6] A polyolefin-based resin in-mold foamed molded product being a product of in-mold foam molding of polyolefin-based resin expanded particles as described in any one of [3] to [5].

[7] A method of producing polyolefin-based resin particles, including the step of

adjusting an $L_{45}/D_{45}$ shrinkage rate to not less than 50%, the $L_{45}/D_{45}$ shrinkage rate being calculated by the following Equation (2),

$L_{45}/D_{45}$ shrinkage rate = $100 \times$ (1 - (average $L_5/D_5$ ratio of polyolefin-based resin expanded particles)/(average $L_4/D_4$ ratio of the polyolefin-based resin particles)) ... Equation (2),

where the polyolefin-based resin expanded particles are obtained by expanding the polyolefin-based resin particles and have an expansion ratio of not less than 15,

the polyolefin-based resin particles having a weight per particle of not less than 0.5 mg/particle and not more than 5.0 mg/particle.

[8] A method of producing polyolefin-based resin expanded particles, including the steps of:

preparing a dispersion slurry by mixing polyolefin-based resin particles, a dispersion medium, and a blowing agent in a container; and

expelling the dispersion slurry into an area having a pressure lower than an internal pressure of the container, and obtaining the polyolefin-based resin expanded particles having an expansion ratio of not less than 15 times, the polyolefin-based resin expanded particles having an $L_{67}/D_{67}$ shrinkage rate of not less than 50%, the $L_{67}/D_{67}$ shrinkage rate being calculated by the following Equation (3):

$$L_{67}/D_{67} \text{ shrinkage rate} = 100 \times (1 - (\text{average } L_7/D_7 \text{ ratio}$$

$$\text{of the polyolefin-based resin expanded particles})/(\text{average}$$

$$L_6/D_6 \text{ ratio of the polyolefin-based resin particles})) \cdots$$

$$\text{Equation (3)}.$$

[9] A method of producing polyolefin-based resin particles, including the steps of:

(a) preparing a polyolefin-based resin composition, by (i) melting by heating and (ii) kneading a blend containing a polyolefin-based resin in an extruder;

(b) extruding the polyolefin-based resin composition thus prepared, through one or more discharge holes provided in a die attached to the extruder;

(c) solidifying by cooling the polyolefin-based resin composition thus extruded, with use of a cooling device including a cooling medium;

(d) taking off, into a gas phase, the polyolefin-based resin composition thus solidified, with use of a take-off device; and

(e) shredding the polyolefin-based resin composition thus taken off, with use of a shredding device, and obtaining the polyolefin-based resin particles,

in step (a), the blend being heated at a heating temperature of not lower than $(Tm_1+40)°C$ and not higher than $(Tm_1+110)°C$, where $Tm_1$ represents a melting point of the polyolefin-based resin,

the cooling medium having a temperature of not lower than $(Tm_1-150)°C$ and not higher than $(Tm_1-100)°C$,

in step (d), the resin composition in the gas phase having a surface temperature of not higher than $(Tm_1-70)°C$,

the polyolefin-based resin particles having an average $L_4/D_4$ ratio of 2.0 to 5.0,

a degree of stretching calculated by the following Equation (15) being 10 m/min to 100 m/min,

$$\text{the degree of stretching} = \text{take-off speed} - \text{resin linear}$$

$$\text{velocity} \cdots \text{Equation (15)},$$

where:

the take-off speed is a speed per unit time at which the take-off device takes off the polyolefin-based resin composition in step (d); and

the resin linear velocity is a value calculated by the following Equation (16),

$$\text{the resin linear velocity} = \text{discharge}$$

$$\text{quantity}/(\text{density of the polyolefin-based resin composition} \times$$

$$\text{total area of the discharge holes}) \cdots \text{Equation (16)},$$

where:

the discharge quantity is an amount per unit time of the polyolefin-based resin composition extruded from the extruder in step (b); and
the total area of the discharge holes is the sum of areas of the one or more discharge holes provided in the die attached to the extruder; and

a relaxation time calculated by the following Equation (17) being more than 0 seconds and not more than 0.2000 seconds,

$$\text{the relaxation time} = \text{distance from the die to the cooling medium}/\text{the take-off speed} \cdots \text{Equation (17)},$$

where the distance from the die to the cooling medium is more than 0 mm and less than 100 mm.

Examples

The following description will more specifically discuss one embodiment of the present invention with Examples and Comparative Examples. Note, however, that the present invention is not limited to these Examples.

Substances used in Examples and Comparative Examples are as follows.

<Polyolefin-based resin>

An ethylene-propylene random copolymer (melting point $Tm_1$ = 147°C, and melt flow rate (MFR) = 8 g/L), which is a polypropylene-based resin, was used.

<Resin particle additive >

Polyethylene glycol

Talc

<Dispersing agent>

Tricalcium phosphate [manufactured by Taihei Chemical Industrial Co., Ltd.]

<Dispersion auxiliary agent>

Sodium alkyl sulfonate (sodium n-paraffin sulfonate) [manufactured by Kao Corporation, LATEMUL PS]

In Examples and Comparative Examples, evaluations were carried out in the following manner.

<Measurement of melting point $Tm_1$ of polyolefin-based resin>

The melting point $Tm_1$ of a polyolefin-based resin was measured by using a differential scanning calorimeter DSC [manufactured by METTLER TOLEDO N. V., DSC 822e]. Specifically, the measurement was carried out as follows. (1) 5 mg to 6 mg of a measurement sample having a temperature of 40°C was heated to 220°C at a temperature increase rate of 10°C/minute, so that the sample was melted. (2) Then, the sample having a temperature of 220°C was cooled to 40°C at a temperature decrease rate of 10°C/minute, so that the sample crystalized. (3) Thereafter, the sample having a temperature of 40°C was heated to 220°C at a temperature increase rate of 10°C/minute. The temperature at a peak (melting peak) of a DSC curve obtained during a second temperature rise (i.e., the curve obtained during step (3)) was defined as the melting point $Tm_1$ of the polyolefin-based resin.

<Measurement of melting point $Tm_2$ of polyolefin-based resin particles>

The melting point $Tm_2$ of polyolefin-based resin particles was measured by using a differential scanning calorimeter DSC [manufactured by METTLER TOLEDO N. V., DSC 822e]. Specifically, DSC was performed as in a manner described in the above <Measurement of melting point $Tm_1$ of polyolefin-based resin>, except that the polyolefin-based resin particles were used in place of the polyolefin-based resin. Then, the temperature at a peak (melting peak) of a DSC curve obtained by the DSC was defined as the melting point $Tm_2$ of the polyolefin-based resin particles.

<Measurement of DSC ratio>

Measurement of a DSC ratio [= {Qh/(Q1 + Qh)} × 100 (%)] was performed by using a differential scanning calorimeter [manufactured by METTLER TOLEDO N. V., DSC 822e]. Specifically, the DSC ratio was calculated from the DSC curve obtained during the first temperature rise, in which the temperature of 5 mg to 6 mg of the polyolefin-based resin expanded particles having a temperature of 40°C was raised to 220°C at a temperature increase rate of 10°C/minutes (see Fig. 3).

The details of Fig. 3 are as described above. As described above, the DSC curve thus obtained was used to calculate a low-temperature-side melting peak heat quantity (Ql) and a high-temperature-side melting peak heat quantity (Qh). The DSC ratio was calculated from the Q1 and Qh thus obtained and the foregoing Equation (13).

<Measurement of expansion ratio of polyolefin-based resin expanded particles>

First, the density of the polyolefin-based resin particles was determined as follows. The polyolefin-based resin particles obtained were weighed in a range of not less than 3 g and not more than 10 g, and dried at 60°C for 6 hours. Thereafter, the polyolefin-based resin particles having been dried were left to stand still for not less than 24 hours in a room at 23°C and at a humidity of 50%. Then, the weight $w_1$ (g) of the polyolefin-based resin particles was measured. Thereafter, the polyolefin-based resin particles were submerged in ethanol contained in a graduated cylinder, and the volume $v_1$ (cm$^3$) of the polyethylene resin particles was measured on the basis of a rise in position of the liquid level in the graduated cylinder (submersion method). Then, the density pr (= wi/vi) of the polyolefin-based resin particles was determined from the above weight $w_1$ (g) and the volume $v_1$ (cm$^3$).

Next, the density of the polyolefin-based resin expanded particles was determined as follows. The polyolefin-based resin expanded particles obtained were weighed in a range of not less than 3 g and not more than 10 g, and dried at 60°C for 6 hours. Thereafter, the polyolefin-based resin expanded particles having been dried were left to stand still for not less than 24 hours in a room at 23°C and at a humidity of 50%. Then, the weight $w_2$ (g) of the polyolefin-based resin expanded particles was measured. Thereafter, the polyolefin-based resin expanded particles were submerged in ethanol contained in a graduated cylinder, and the volume $v_2$ (cm$^3$) of the polyolefin-based resin expanded particle was measured on the basis of a rise in position of the liquid level in the graduated cylinder (submersion method). Then, the density pb (= $w_2$/$v_2$) of the polyolefin-based resin expanded particles was determined from the above weight $w_2$ (g) and the volume $v_2$ (cm$^3$).

The ratio ($\rho$r/$\rho$b) of the density pr of the polyolefin-based resin particles prior to expansion to the density pb of the polyolefin-based resin expanded particles was defined as the expansion ratio (= pr/pb).

<Evaluation of surface smoothness of molded product>

An edge portion of a resultant molded product was visually observed and evaluated in five grades from 1 to 5. The evaluation criteria are as follows. The larger number means a better surface property.

1: Uneven regions in a whole region of the edge portion are not less than 70% and not more than 100%.
2: Uneven regions in a whole region of the edge portion are not less than 40% and less than 70%.
3: Uneven regions in a whole region of the edge portion are not less than 20% and less than 40%.
4: Uneven regions in a whole region of the edge portion are not less than 10% and less than 20%.
5: Uneven regions in a whole region of the edge portion are not less than 0% and less than 10%.

(It should be noted that "uneven regions in a whole region of the edge portion is 0%" means that there is no uneven region in the whole region of the edge portion.)

<Evaluation of surface integrity of molded product>

With regard to an inter-particle state of 20 particles on the surface of a resultant in-mold foamed molded product, the presence/absence of an inter-particle gap(s) was visually detected. In a case where the inter-particle gap(s) was/were detected, non-straight boundary lines were further detected visually from boundary lines between the inter-particle gap(s) and the expanded particles, and the number of the non-straight boundary lines was counted. Fig. 4 and the description in the above section (6-1. Surface integrity of molded product) can be referred to as appropriate for the inter-particle gap(s) on the surface of the molded product and the boundary lines. The surface integrity was evaluated by the following criteria, on the basis of results thus obtained. Excellent: There is no inter-particle gap; or there is/are an inter-particle gap(s) and the number of non-straight boundary lines between the inter-particle gap(s) and the expanded particles are not more than three.

Good: There is/are an inter-particle gap(s) and the number of non-straight boundary lines between the inter-particle gap(s) and the expanded particles are not less than four and not more than eight.

Poor: There is/are an inter-particle gap(s) and the number of non-straight boundary lines between the inter-particle gap(s) and the expanded particles are not less than nine.

The following will discuss methods of producing polyolefin-based resin particles, polyolefin-based resin expanded particles, and a polyolefin-based resin in-mold foamed molded products in Examples and Comparative Examples.

[Method of producing polyolefin-based resin particles]

The polyolefin-based resin particles were produced by using a biaxial extruder, a cooling device, a take-off device, and a cutting device. As the cooling device, a water tank having water as the cooling medium was used. Specifically, the method of producing the polyolefin-based resin particles was as follows. First, 100 parts by weight of a polyolefin-based resin, 0.5 parts by weight of polyethylene glycol, and 0.05 parts by weight of talc were dry blended. A mixture thus obtained by dry blending was melt-kneaded with use of the biaxial extruder at the resin temperature (°C) shown in Table 1, so that a polyolefin-based resin composition, which is a melt-kneaded material, was prepared. Thereafter, the melt-kneaded polyolefin-based resin composition was extruded in a strand form through a discharge hole(s) provided in a die attached to the biaxial extruder. Here, the total number of discharge holes provided in the die attached to the biaxial extruder and a discharge hole diameter (the diameter of a cross section per discharge hole of the discharge holes) was as shown in Table 1. In addition, the polyolefin-based resin composition was discharged from the extruder in a discharge quantity (kg/hr) as shown in Table 1. The shape of the cross section of the discharge hole is circular, and therefore, it is possible to determine an area ($mm^2$) per discharge hole from the discharge hole diameter. Further, in each biaxial extruder used in Examples and Comparative Examples, a plurality of discharge holes have the same discharge hole diameter.

Therefore, in each biaxial extruder used in Examples and Comparative Examples, the plurality of discharge holes have the same area per discharge hole. Accordingly, the total area of the discharge holes can be calculated by multiplying the area per discharge hole by the total number of the discharge holes.

Next, a strand (polyolefin-based resin composition) thus obtained was fed to the water tank and cooled and solidified. Here, the distance from the die to the cooling medium and the temperature of the cooling medium were as shown in Table 1.

Then, the strand thus solidified was taken off from the water tank at a take-off speed (m/min) as shown in Table 1, with use of the take-off device. The surface temperature of the strand taken off from the water tank, that is, the surface temperature of the polyolefin-based resin composition expelled from the cooling device into a gas phase was measured by an infrared radiation thermometer. Table 1 shows results of this measurement.

Next, the strand taken off was cut with use of the cutting device, so that polyolefin-based resin particles were obtained. The polyolefin-based resin particles thus obtained were measured, so that a weight per particle and an average $L_1/D_1$ ratio were obtained. Table 1 shows results of this measurement. Note that the average $L_1/D_1$ ratio can be also regarded as an average $L_4/D_4$ ratio, as an average $L_6/D_6$ ratio, and as an average $L_8/D_8$ ratio.

Calculation based on the foregoing Equations (6), (7) and (8) was carried out for obtaining a resin linear velocity, a degree of stretching, and a relaxation time. Table 1 shows results of this calculation. Note that the density of the polyolefin-based resin particles was 0.7 $g/cm^3$ to 0.8 $g/cm^3$. Further, the melting point $Tm_2$ of the polyolefin-based resin particles was 146°C.

[Method of producing polyolefin-based resin expanded particles]

In an autoclave of 0.3 $m^3$, 100 parts by weight of the polyolefin-based resin particles, 200 parts by weight of water as a dispersion medium, tricalcium phosphate as a dispersing agent, and sodium alkyl sulfonate as a dispersion auxiliary agent were put, and this container was sealed. Then, 5 parts by weight of carbon dioxide gas as a blowing agent was put in the container, and those raw materials provided in the container were stirred, so that a dispersion slurry was prepared. Next, the temperature in the container was raised to 153°C (expansion temperature) and the pressure in the container was also raised to 3.0 MPa·G (expansion pressure). Subsequently, the temperature and pressure in the container were maintained at the above expansion temperature and expansion pressure for 20 minutes. Next, one end of the autoclave was opened and the dispersion slurry in the container was expelled through an orifice plate of 3.2 mmφ into a cylindrical container of a non-sealed system (under atmospheric pressure), so that polyolefin-based resin expanded particles were obtained. Measurement was performed for obtaining the DSC ratio, the expansion ratio and an average $L_2/D_2$ ratio of the polyolefin-based resin expanded particles thus obtained. Table 1 shows results of this

measurement. Further, an $L_{12}/D_{12}$ shrinkage rate was calculated from the average $L_1/D_1$ ratio and the average $L_2/D_2$ ratio. Table 1 shows results of this calculation. Note that the average $L_2/D_2$ ratio can be also regarded as an average $L_3/D_3$ ratio, as an average $L_5/D_5$ ratio, and as an average $L_7/D_7$ ratio. Further, the $L_{12}/D_{12}$ shrinkage rate can be also regarded as an $L_{45}/D_{45}$ shrinkage rate, as an $L_{67}/D_{67}$ shrinkage rate, and as an $L_{83}/D_{83}$ shrinkage rate.

[Method of producing polyolefin-based resin in-mold foamed molded product]

After the polyolefin-based resin expanded particles obtained as above were washed with a hydrochloric acid aqueous solution having pH of 1 for 30 seconds and then washed with water for 30 seconds, the expanded particles were dried at 75°C for 20 hours. Thereafter, the polyolefin-based resin expanded particles were aged at room temperature for not shorter than 1 day. Then, the polyolefin-based resin expanded particles were used for production of a polyolefin-based resin in-mold foamed molded product, by a method described below.

The polyolefin-based resin expanded particles were put in a pressure-resistant vessel, and were impregnated with pressurized air, so that the internal pressure of the expanded particles was adjusted to 0.10 MPa·G. The expanded particles to which the internal pressure was given were put in a mold of 400 mm × 300 mm × 50 mm so as to fill the mold. Here, calculation was carried out for obtaining a filling ratio of the polyolefin-based resin expanded particles with respect to the mold. Table 1 shows results of this calculation.

Thereafter, the mold and the expanded particles were heated with use of steam at 0.3 MPa·G, so that the polyolefin-based resin expanded particles were fused together. As a result, the polyolefin-based resin in-mold foamed molded product was obtained. After removed from the mold, the polyolefin-based resin in-mold foamed molded product thus obtained was dried at 75°C for 20 hours, and further aged at 23°C for not shorter than 5 hours. Subsequently, measurement was performed for obtaining the surface smoothness and the surface integrity of the polyolefin-based resin in-mold foamed molded product thus obtained. Table 1 shows results of this measurement.

[Table 1]

|  |  |  |  | Ex. 1 | Ex. 2 | Ex. 3 | Ex. 4 | Ex. 5 | Ex. 6 |
|---|---|---|---|---|---|---|---|---|---|
| Resin particles | Production conditions | Discharge quantity | kg/hr | 40 | 40 | 10 | 40 | 40 | 40 |
|  |  | Resin temperature | °C | 220 | 220 | 220 | 220 | 220 | 240 |
|  |  | Discharge hole diameter | mm | 1.2 | 1.2 | 3 | 1.2 | 1.2 | 1.2 |
|  |  | Total number of discharge holes | holes | 30 | 30 | 8 | 30 | 30 | 30 |
|  |  | Resin linear velocity | m/min | 26 | 26 | 4 | 26 | 26 | 26 |
|  |  | Take-off speed | m/min | 38 | 40 | 50 | 38 | 38 | 40 |
|  |  | Degree of stretching | m/min | 12 | 14 | 46 | 12 | 12 | 14 |
|  |  | Distance from die to cooling medium | mm | 80 | 10 | 10 | 80 | 80 | 10 |
|  |  | Relaxation time | sec | 0.1263 | 0.0150 | 0.0120 | 0.1263 | 0.1263 | 0.0150 |
|  |  | Cooling medium temperature | °C | 15 | 15 | 15 | 35 | 5 | 15 |
|  |  | Surface temperature of strand taken off from water tank | °C | 20 | 20 | 20 | 30 | 5 | 20 |
|  | Physical properties | Particle weight | mg/particle | 1.2 | 1.2 | 1.2 | 1.2 | 1.2 | 1.2 |
|  |  | Average $L_1/D_1$ ratio | - | 2.3 | 2.7 | 4.3 | 2.4 | 2.5 | 2.7 |

## [Table 1] (cont.)

| | | | | Ex. 1 | Ex. 2 | Ex. 3 | Ex. 4 | Ex. 5 | Ex. 6 |
|---|---|---|---|---|---|---|---|---|---|
| Expanded particles | Production conditions | | Expansion temperature | °C | 153 | 153 | 153 | 153 | 153 | 153 |
| | | | Expansion pressure | MPa·G | 3 | 3 | 3 | 3 | 3 | 3 |
| | Physical properties | | DSC ratio | % | 25 | 25 | 25 | 25 | 25 | 25 |
| | | | Expansion ratio | times | 20 | 20 | 20 | 20 | 20 | 20 |
| | | | Average $L_2/D_2$ ratio | - | 1.10 | 0.90 | 0.90 | 1.20 | 1.00 | 0.95 |
| | | | $L_{12}/D_{12}$ shrinkage rate | % | 52 | 67 | 80 | 50 | 60 | 65 |
| Molded product | Physical properties | | Surface smoothness | - | 3 | 4 | 5 | 4 | 4 | 4 |
| | | | Surface integrity | - | good | excellent | excellent | good | excellent | excellent |

## [Table 1] (cont.)

| | | | | Ex. 7 | Ex. 8 | Ex. 9 | Comp. Ex. 1 | Comp. Ex. 2 |
|---|---|---|---|---|---|---|---|---|
| Resin particles | Production conditions | Discharge quantity | kg/hr | 40 | 10 | 10 | 40 | 40 |
| | | Resin temperature | °C | 170 | 220 | 220 | 220 | 220 |
| | | Discharge hole diameter | mm | 1.2 | 3 | 3 | 1.2 | 1.2 |
| | | Total number of discharge holes | holes | 30 | 8 | 8 | 30 | 30 |
| | | Resin linear velocity | m/min | 26 | 4 | 4 | 26 | 26 |
| | | Take-off speed | m/min | 40 | 80 | 50 | 38 | 42 |
| | | Degree of stretching | m/min | 14 | 76 | 46 | 12 | 16 |
| | | Distance from die to cooling medium | mm | 10 | 10 | 10 | 150 | 100 |
| | | Relaxation time | sec | 0.0150 | 0.0075 | 0.0120 | 0.2368 | 0.1429 |
| | | Cooling medium temperature | °C | 15 | 15 | 35 | 15 | 15 |
| | | Surface temperature of strand taken off from water tank | °C | 20 | 20 | 60 | 20 | 20 |
| | Physical properties | Particle weight | mg/particle | 1.2 | 1.2 | 1.2 | 1.2 | 1.2 |
| | | Average $L_1/D_1$ ratio | - | 2.7 | 4.4 | 4.3 | 1.2 | 2.0 |

## [Table 1] (cont.)

| | | | | Ex. 7 | Ex. 8 | Ex. 9 | Comp. Ex. 1 | Comp. Ex. 2 |
|---|---|---|---|---|---|---|---|---|
| Expanded particles | Production conditions | Expansion temperature | °C | 153 | 153 | 153 | 153 | 153 |
| | | Expansion pressure | MPa·G | 3 | 3 | 3 | 3 | 3 |
| | Physical properties | DSC ratio | % | 25 | 25 | 25 | 25 | 25 |
| | | Expansion ratio | times | 20 | 20 | 20 | 20 | 20 |
| | | Average $L_2/D_2$ ratio | - | 0.95 | 0.90 | 1.10 | 1.00 | 1.20 |
| | | $L_{12}/D_{12}$ shrinkage rate | % | 65 | 81 | 74 | 17 | 40 |
| Molded product | Physical properties | Surface smoothness | - | 4 | 5 | 4 | 2 | 2 |
| | | Surface integrity | - | excellent | excellent | excellent | poor | poor |

It is clear from Table 1 that a molded product excellent in surface property can be provided by the polyolefin-based resin expanded particles in accordance with an embodiment of the present invention obtained from the polyolefin-based resin particles in accordance with an embodiment of the present invention, as in each of Examples (Ex.) 1 to 9. It is also clear that a molded product having a poorer surface property is provided by expanded particles outside the scope of the present invention which are obtained from the polyolefin-based resin particles outside the scope of the present invention, as in each of Comparative Examples (Comp. Ex.) 1 and 2.

Industrial Applicability

An embodiment of the present invention can provide polyolefin-based resin particles, which make it possible to provide expanded particles that enable provision of a molded product excellent in surface property. A molded product obtained by in-mold foam molding with use of the expanded particles obtained from the polyolefin-based resin particles in accordance with an embodiment of the present invention can be suitably used in a variety of applications such as shock-absorbing packing materials, shipping materials, thermal insulating materials, civil engineering and construction materials, and automotive components.

Reference Signs List

1     polyolefin-based resin expanded particle
2     inter-particle gap
3     boundary line
3a    straight boundary line
3b    non-straight boundary line
A    width of boundary line
B    height of boundary line

**Claims**

1. Polyolefin-based resin particles comprising a polyolefin-based resin as a base material resin, the polyolefin-based resin particles having:

   a weight per particle of not less than 0.5 mg/particle and not more than 5.0 mg/particle; and
   an $L_{12}/D_{12}$ shrinkage rate of not less than 50%, the $L_{12}/D_{12}$ shrinkage rate being calculated by the following Equation (1):

$$L_{12}/D_{12} \text{ shrinkage rate} = 100 \times (1 - (\text{average } L_2/D_2 \text{ ratio}$$

$$\text{of polyolefin-based resin expanded particles})/(\text{average } L_1/D_1$$

$$\text{ratio of the polyolefin-based resin particles})) \cdots \text{ Equation (1)},$$

   where the polyolefin-based resin expanded particles are obtained by expanding the polyolefin-based resin particles and have an expansion ratio of not less than 15.

2. The polyolefin-based resin particles as set forth in claim 1, wherein the average $L_1/D_1$ ratio of the polyolefin-based resin particles is 2.0 to 5.0.

3. Polyolefin-based resin expanded particles obtained by expanding polyolefin-based resin particles as recited in claim 1 or 2.

4. The polyolefin-based resin expanded particles as set forth in claim 3, having an average $L_3/D_3$ ratio of not less than 0.8 and less than 1.5.

5. The polyolefin-based resin expanded particles as set forth in claim 3 or 4 having an expansion ratio of not less than 15 and not more than 25.

6. A polyolefin-based resin in-mold foamed molded product being a product of in-mold foam molding of polyolefin-based resin expanded particles as recited in any one of claims 3 to 5.

7. A method of producing polyolefin-based resin particles, comprising the step of

   adjusting an $L_{45}/D_{45}$ shrinkage rate to not less than 50%, the $L_{45}/D_{45}$ shrinkage rate being calculated by the following Equation (2),

$$L_{45}/D_{45} \text{ shrinkage rate} = 100 \times (1 - (\text{average } L_5/D_5 \text{ ratio}$$

$$\text{of polyolefin-based resin expanded particles})/(\text{average } L_4/D_4$$

$$\text{ratio of the polyolefin-based resin particles})) \cdots \text{Equation (2)},$$

where the polyolefin-based resin expanded particles are obtained by expanding the polyolefin-based resin particles and have an expansion ratio of not less than 15,
the polyolefin-based resin particles having a weight per particle of not less than 0.5 mg/particle and not more than 5.0 mg/particle.

8. A method of producing polyolefin-based resin expanded particles, comprising the steps of:

preparing a dispersion slurry by mixing polyolefin-based resin particles, a dispersion medium, and a blowing agent in a container; and
expelling the dispersion slurry into an area having a pressure lower than an internal pressure of the container, and obtaining the polyolefin-based resin expanded particles having an expansion ratio of not less than 15 times, the polyolefin-based resin expanded particles having an $L_{67}/D_{67}$ shrinkage rate of not less than 50%, the $L_{67}/D_{67}$ shrinkage rate being calculated by the following Equation (3):

$$L_{67}/D_{67} \text{ shrinkage rate} = 100 \times (1 - (\text{average } L_7/D_7 \text{ ratio}$$

$$\text{of the polyolefin-based resin expanded particles})/(\text{average}$$

$$L_6/D_6 \text{ ratio of the polyolefin-based resin particles})) \cdots$$

$$\text{Equation (3).}$$

9. A method of producing polyolefin-based resin particles, comprising the steps of:

(a) preparing a polyolefin-based resin composition, by (i) melting by heating and (ii) kneading a blend containing a polyolefin-based resin in an extruder;
(b) extruding the polyolefin-based resin composition thus prepared, through one or more discharge holes provided in a die attached to the extruder;
(c) solidifying by cooling the polyolefin-based resin composition thus extruded, with use of a cooling device including a cooling medium;
(d) taking off, into a gas phase, the polyolefin-based resin composition thus solidified, with use of a take-off device; and
(e) shredding the polyolefin-based resin composition thus taken off, with use of a shredding device, and obtaining the polyolefin-based resin particles,
in step (a), the blend being heated at a heating temperature of not lower than $(Tm_1+40)°C$ and not higher than $(Tm_1+110)°C$, where Tmi represents a melting point of the polyolefin-based resin,
the cooling medium having a temperature of not lower than $(Tm_1-150)°C$ and not higher than $(Tm_1-100)°C$,
in step (d), the resin composition in the gas phase having a surface temperature of not higher than $(Tmi-70)°C$,
the polyolefin-based resin particles having an average $L_4/D_4$ ratio of 2.0 to 5.0,
a degree of stretching calculated by the following Equation (15) being 10 m/min to 100 m/min,

$$\text{the degree of stretching} = \text{take-off speed} - \text{resin linear}$$

$$\text{velocity} \cdots \text{Equation (15)},$$

where:

the take-off speed is a speed per unit time at which the take-off device takes off the polyolefin-based resin composition in step (d); and
the resin linear velocity is a value calculated by the following Equation (16),

$$\text{the resin linear velocity} = \text{discharge quantity}/(\text{density of the polyolefin-based resin composition} \times \text{total area of the discharge holes}) \cdots \text{Equation (16)},$$

where:

the discharge quantity is an amount per unit time of the polyolefin-based resin composition extruded from the extruder in step (b); and
the total area of the discharge holes is the sum of areas of the one or more discharge holes provided in the die attached to the extruder; and

a relaxation time calculated by the following Equation (17) being more than 0 seconds and not more than 0.2000 seconds,

$$\text{the relaxation time} = \text{distance from the die to the cooling medium}/\text{the take-off speed} \cdots \text{Equation (17)},$$

where the distance from the die to the cooling medium is more than 0 mm and less than 100 mm.

## FIG. 1

（a）

$L_1$

$D_1\ max$

$D_1\ min$

（b）

$L_1$

A

A'

（c）

A

$D_1\ max$
∥
$D_1\ min$

A'

## FIG. 2

（a）

$L_2$

A

A'

$D_2$ max

$D_2$ min

（b）

A

$d_2$ max

A'

$d_2$ min

（c）

$L_2$

B

B'

（d）

B

$D_2$ max
=
$d_2$ max

B'

$D_2$ min
=
$d_2$ min

FIG. 3

# FIG. 4

# FIG. 5

## INTERNATIONAL SEARCH REPORT

| International application No. |
|---|
| PCT/JP2020/008918 |

**A. CLASSIFICATION OF SUBJECT MATTER**

C08J 9/16(2006.01)i
FI: C08J9/16

According to International Patent Classification (IPC) or to both national classification and IPC

**B. FIELDS SEARCHED**

Minimum documentation searched (classification system followed by classification symbols)
C08J9/16

Documentation searched other than minimum documentation to the extent that such documents are included in the fields searched

| | |
|---|---|
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2-53837 A (JSP CO., LTD.) 22.02.1990 (1990-02-22) entire text | 1-9 |
| A | JP 2005-146017 A (JSP CO., LTD.) 09.06.2005 (2005-06-09) entire text | 1-9 |
| A | JP 2005-325179 A (JSP CO., LTD.) 24.11.2005 (2005-11-24) entire text | 1-9 |
| A | JP 2003-246864 A (JSP CO., LTD.) 05.09.2003 (2003-09-05) entire text | 1-9 |
| A | JP 2014-98161 A (KANEKA CORP.) 29.05.2014 (2014-05-29) entire text | 1-9 |
| A | WO 2016/136875 A1 (KANEKA CORP.) 01.09.2016 (2016-09-01) entire text | 1-9 |
| A | WO 2015/098619 A1 (KANEKA CORP.) 02.07.2015 (2015-07-02) entire text | 1-9 |

☒ Further documents are listed in the continuation of Box C.　　☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 27 May 2020 (27.05.2020) | 09 June 2020 (09.06.2020) |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

| INTERNATIONAL SEARCH REPORT | International application No.<br>PCT/JP2020/008918 |
|---|---|

C (Continuation).    DOCUMENTS CONSIDERED TO BE RELEVANT

| Category* | Citation of document, with indication, where appropriate, of the relevant passages | Relevant to claim No. |
|---|---|---|
| A | WO 2013/011951 A1 (KANEKA CORP.) 24.01.2013 (2013-01-24) entire text | 1-9 |

Form PCT/ISA/210 (continuation of second sheet) (January 2015)

**INTERNATIONAL SEARCH REPORT**
Information on patent family members

International application No.

PCT/JP2020/008918

| Patent Documents referred in the Report | Publication Date | Patent Family | Publication Date |
|---|---|---|---|
| JP 2-53837 A | 22 Feb. 1990 | (Family: none) | |
| JP 2005-146017 A | 09 Jun. 2005 | (Family: none) | |
| JP 2005-325179 A | 24 Nov. 2005 | (Family: none) | |
| JP 2003-246864 A | 05 Sep. 2003 | (Family: none) | |
| JP 2014-98161 A | 29 May 2014 | (Family: none) | |
| WO 2016/136875 A1 | 01 Sep. 2016 | (Family: none) | |
| WO 2015/098619 A1 | 02 Jul. 2015 | US 2016/0319095 A1 claims, examples EP 3088454 A1 | |
| WO 2013/011951 A1 | 24 Jan. 2013 | US 2014/0138868 A1 claims, examples EP 2733164 A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008274025 A
- JP 2017179281 A
- WO 2017169260 A